# EUROPEAN PATENT APPLICATION

(11) **EP 4 386 644 A1**
(43) Date of publication of application: **19.06.2024**
(21) Application number: 23193363.1
(22) Date of filing: 25.08.2023
(51) Int. Cl.: G06Q 20/20, G06Q 20/32, G07G 1/00

(54) **INFORMATION PROCESSING APPARATUS AND TRANSACTION MANAGEMENT SYSTEM**

(30) Priority: 13.12.2022 JP 2022198941
(71) Applicant: Toshiba TEC Kabushiki Kaisha, Tokyo 141-8562 (JP)
(72) Inventor: Komiyama, Hikaru, Tokyo, 141-8562 (JP); Esaki, Hiroshi, Tokyo, 141-8562 (JP); Tsujii, Ken, Tokyo, 141-8562 (JP)
(74) Representative: Bandpay & Greuter

(57) **Abstract**

According to an embodiment, an information processing apparatus has a communication interface that connects to a portable terminal, an attendant terminal, and a checkout machine. A storage unit of the apparatus is for storing transaction information from the portable terminal. A processor of the apparatus stores transaction information received from the portable terminal in association with a transaction identification and a check completion flag. The check completion flag indicates whether the transaction requires a store clerk confirmation before completion. The processor receives a transaction information request with the transaction identification from the checkout machine, and, in response to transaction information request, outputs the transaction information corresponding to the transaction identification if the check completion flag indicates the store clerk confirmation has been completed or else an error message if the store clerk confirmation has not been completed.

## Description

### FIELD

Embodiments described herein relate to an information processing apparatus and a transaction management system for retail stores and the like.

### BACKGROUND

In stores, such as supermarkets, systems permitting customers themselves to register merchandise for purchase on the sales floor (merchandise area) have been employed. As one such system, a shopping cart with a tablet terminal and a scanner has been proposed.

A customer doing shopping scans a code symbol (such as a merchandise barcode) attached to merchandise to purchase in the merchandise area of the store with a scanner. Merchandise registration is performed based on the merchandise codes read by the scanner and the registered merchandise information (merchandise name, price, etc.) is stored as transaction information in the tablet terminal or on a store server. Then, the merchandise information is transferred to a checkout machine that performs checkout processing where the customer pays the charges (prices) for the registered merchandise. In such a system, the customer himself or herself may operate the checkout machine to pay.

In other similar systems for shopping, a customer uses a portable terminal such as a smartphone owned by the customer instead of tablet terminals and scanners provided by stores such as in a cart based system. In such a smartphone-type system, an application program for shopping is installed in the smartphone by the customer. Then, a merchandise barcode can be read by imaging of the merchandise barcode using the camera of the smartphone.

The stores employing the above-described systems generally still place employees in checkout areas where the checkout machines are placed. The employees placed in the checkout areas (also referred to as "attendants") monitor merchandise being purchased by the customers and assist the customers to operate the checkout machines. The monitoring or checks performed by the attendants vary depending on operational control from store to store. For example, the checks may include age verification of the customer when the merchandise to be purchased requires age verification.

The attendant generally performs such checks at the checkout machine at which the customer operates for payment. For example, when the merchandise to be purchased requires age verification, a calling lamp (call lamp) of the checkout machine is lighted and the attendant moves to the checkout machine and performs age verification of the customer. Accordingly, the attendant is required to move to the checkout machine in each case and thus the checking work by the attendant is cumbersome.

To this end, an information processing apparatus and a transaction management system according to the appended claims are provided.

### BRIEF DESCRIPTION OF THE DRAWINGS

FIG. 1 shows a schematic configuration of a transaction management system in an embodiment.
FIG. 2 shows a checkout area of a store employing the transaction management system.
FIG. 3 is a block diagram of a server apparatus.
FIG. 4 is a diagram for explanation of a data configuration of a merchandise master stored in a memory unit.
FIG. 5 is a diagram for explanation of a data configuration of a terminal management table.
FIG. 6 is a diagram for explanation of a data configuration of a highlight information management table.
FIG. 7 is a diagram for explanation of a data configuration of a transaction information management table.
FIG. 8 is a diagram for explanation of a data configuration of a mode management table.
FIG. 9 is a block diagram of a control unit of the server apparatus.
FIG. 10 is a block diagram of a portable terminal.
FIG. 11 is a block diagram of a control unit of the portable terminal.
FIG. 12 is a block diagram of an attendant PC.
FIG. 13 is a diagram for explanation of a data configuration of a status management table stored in a memory unit of the attendant PC.
FIG. 14 is a block diagram of a control unit of the attendant PC.
FIG. 15 is a sequence chart showing a flow of an operation of a transaction management system.
FIG. 16 shows a transaction information display window displayed by the portable terminal.
FIG. 17 shows a transaction list window displayed by the attendant PC.
FIG. 18 shows an attendant check window displayed by the portable terminal.
FIG. 19 shows a transaction statement window displayed by the attendant PC.
FIG. 20 shows a guidance window displayed by the attendant PC.
FIG. 21 shows a checkout window displayed by the portable terminal.
FIG. 22 is a flowchart of attendant check determination processing by a control unit of a server apparatus.
FIG. 23 shows a highlight setting window displayed by the attendant PC.
FIG. 24 is a flowchart of attendant check processing by a control unit of a checkout machine in a modified example.

### DETAILED DESCRIPTION

The present disclosure describes a technological solution to existing problems in checkout systems and the like requiring attendant/clerk verification of certain transactions. In general, embodiments provide improvements associated with facilitation of verification work by an attendant permitting improved worker efficiency or the like as compared to existing systems.

According to an embodiment, an information processing apparatus includes a communication interface connectable to a portable registration terminal, an attendant terminal, and a checkout machine, a storage unit for storing transaction information from the portable registration terminal, and a processor. The processor is configured to store transaction information received from the portable registration terminal via the communication interface in association with a transaction identification and a check completion flag. The check completion flag indicates whether the transaction requires a store clerk confirmation before transaction completion. The processor is further configured to receive a transaction information request indicating the transaction identification via the communication interface from the checkout machine and, in response to transaction information request, output the transaction information corresponding to the transaction identification if the check completion flag indicates the store clerk confirmation has been completed or an error message if the check completion flag indicates the store clerk confirmation has not been completed.

An information processing apparatus and a transaction management system of an example embodiment will be explained. Note that the following examples are nonlimiting. For example, a server apparatus managing information of a plurality of stores is described in one example, but such a server apparatus may instead be a store server managing information of a single store or an attendant PC or may incorporate the functions of a server apparatus. An example in which the portable terminal used for merchandise registration is owned by a customer will be described, but portable terminals in other examples may be provided by the store. In the following "merchandise registration" refers to storage (registration) of information about merchandise to be purchased by the customer such as inclusion on or in a transaction list.

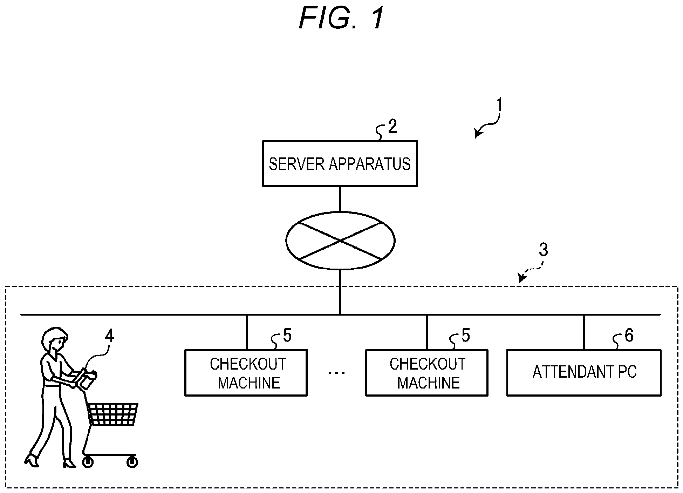

A transaction management system of an embodiment will be explained with reference to the drawings. FIG. 1 shows a schematic configuration of a transaction management system 1. The transaction management system 1 is used in a store selling merchandise, such as a supermarket. The transaction management system 1 has a server apparatus 2 and a mobile self-service checkout system 3. The server apparatus 2 and the mobile self-service checkout system 3 are communicably connected with each other via a network such as the Internet.

The mobile self-service checkout system 3 is employed in a single store and uses a portable terminal 4 possessed by a customer, a checkout machine 5, and an attendant PC 6. The portable terminal 4, the checkout machine 5, and the attendant PC 6 are communicably connected with one another via an in-store network such as a wired or wireless LAN (Local Area Network). Further, the portable terminal 4, the checkout machine 5, and the attendant PC 6 are communicably connected to the server apparatus 2 via the in-store network.

The portable terminal 4 can communicate with the server apparatus 2 via another network instead of the in-store network. Furthermore, various other apparatuses may be connected to the in-store network. For example, a POS terminal for a store clerk to perform operation for merchandise registration and payment, a self-service POS terminal for the customer to perform operation for merchandise registration and payment, a semi-self-service POS system for the store clerk to perform operation for merchandise registration and for the customer to perform operation for payment, or the like may be coupled to the in-store network. Furthermore, the numbers of the portable terminals 4 and the checkout machines 5 are not limited to those in the illustrated example.

The server apparatus 2 receives entry information from the portable terminal 4. The entry information contains a company code and a store code of the store where the customer is located. The server apparatus 2 receives the entry information from the portable terminal 4, and thereby, may identify the store where the portable terminal 4 is present. The server apparatus 2 issues a terminal code and a transaction code to the portable terminal 4 transmitting the entry information, and transmits the codes to the portable terminal 4. The terminal code is terminal identification information for identification of the portable terminal 4 and the transaction code is transaction identification information for identification of the transaction.

Further, the server apparatus 2 transmits mode information to the portable terminal 4. The mode information is information representing a mode of the mobile self-service checkout system 3 of the store where the customer is located. The details of the mode information will be described later.

When transmitting various kinds of information to the server apparatus 2, the portable terminal 4 transmits the terminal code, and thereby, the server apparatus 2 may easily identify the portable terminal 4 as an information transmission source. Note that, in the embodiment, multiple transaction codes are not issued to one portable terminal 4 while the customer is doing shopping. That is, the terminal code corresponds to the transaction code with a one-on-one correspondence and either one of the codes may function of the other in this context.

Specifically, the transaction may be identified by the terminal code. Therefore, also, the terminal code is an example of the transaction identification information. In other examples, the portable terminal 4 may be identified by the transaction code. Therefore, also, the transaction code is an example of the terminal identification information. Accordingly, in the following description, the terminal code and the transaction code can be appropriately replaced by each other. In some examples, the server apparatus 2 may issue only one or the other of the terminal code and the transaction code.

The server apparatus 2 receives a registration request from the portable terminal 4. The registration request contains the terminal code and a merchandise code read by the portable terminal 4. The server apparatus 2 managing the merchandise information of each store reads out the merchandise information corresponding to the merchandise codes contained in the registration request received from the portable terminal 4 and registers the merchandise as transaction objects. In other words, the server apparatus 2 registers the merchandise information as a part of the transaction information. The transaction information contains various kinds of information necessary for the customer to make payment such as the merchandise information. The merchandise information contains information including a merchandise name, a price, and highlight information. The highlight information indicates merchandise on which the attendant should focus attention for checking. As described above, the server apparatus 2 manages the transaction information for each customer individually, in other words, with respect to each terminal code in real time.

The server apparatus 2 transmits the transaction information of the store (referred to as "store transaction information") to the attendant PC 6. The server apparatus 2 may regularly receive a store transaction information request from the attendant PC 6 at short time intervals, and transmit the store transaction information as a response to a store transaction information request. Thereby, the attendant PC 6 may acquire the transaction information of the store substantially in real time. The attendant PC 6 manages (tracks) statuses of the respective customers based on the acquired transaction information. Note that, the server apparatus 2 itself may transmit the store transaction information without receiving a request. In this case, the attendant PC 6 is not required to transmit a store transaction information request, but the store transaction information can still be updated.

The server apparatus 2 receives check information from the attendant PC 6. The check information is information representing that the merchandise having the barcode scanned by the customer, i.e., the merchandise to be purchased by the customer is already checked by the attendant and contains the transaction code. In the following description, the check performed by the attendant with respect to the merchandise to be purchased may be referred to as an "attendant check". The server apparatus 2 correlates and stores the terminal code, the transaction code, and the check information with one another, and thereby, tracks whether an attendant check for each transaction has been completed by the attendant if necessary.

The server apparatus 2 receives the transaction information request from the checkout machine 5. The transaction information request is for requesting the transaction information for the customer to pay and contains the transaction code for identification of the transaction to be settled. When receiving the transaction information request, the server apparatus 2 determines whether an attendant check of the transaction identified by the transaction code contained in the transaction information request (object transaction) has been completed.

Then, if the attendant check was completed, the server apparatus 2 transmits the relevant transaction information to the checkout machine 5. If an attendant check is not yet completed, the server apparatus 2 does not transmit the transaction information, but transmits error information to the checkout machine 5. The error information indicates that the attendant check is not completed. The server apparatus 2 enables payment at the checkout machine 5 by the customer under the condition that the attendant check be performed in advance.

The server apparatus 2 is an example of an information processing apparatus. Note that the server apparatus 2 may comprise a plurality of computers. In other words, the functions of the server apparatus 2 may be distributed in the plurality of computers.

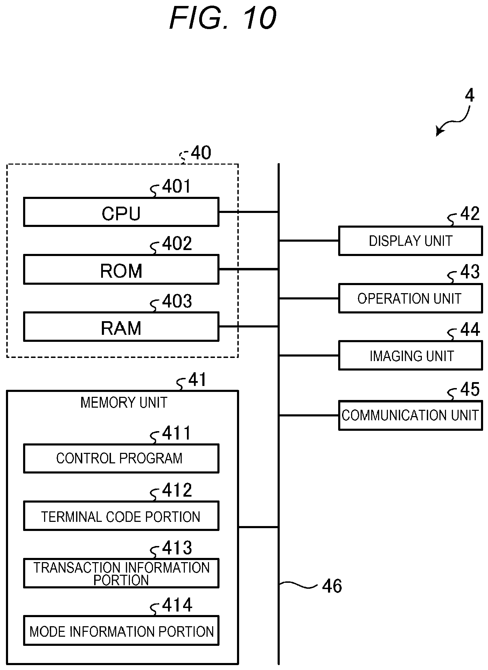

The portable terminal 4 is a portable terminal possessed by the customer. In an embodiment, the portable terminal 4 is a smartphone possessed by the customer. An application program for mobile self-service checkout system is installed in the portable terminal 4. The portable terminal 4 images the merchandise barcode by an imaging unit 44 (see FIG. 10) and reads the merchandise code. The portable terminal 4 transmits and receives various kinds of information to and from the server apparatus 2.

The checkout machine 5 is the so-called self-service checkout machine operated by the customer him- or herself. The checkout machine 5 includes a scanner unit. The checkout machine 5 reads the transaction code from a checkout barcode of a checkout window displayed on the portable terminal 4 by the scanner unit. The checkout machine 5 transmits the transaction information request containing the read transaction code to the server apparatus 2.

When receiving the transaction information from the server apparatus 2 as a response to the transaction information request, the checkout machine 5 executes checkout processing based on the transaction information. The checkout processing is processing for payment of the charge of the merchandise purchased by the customer. The checkout processing can be display of the transaction information, calculation of a change amount, paying out of the change, etc. in cash settlement, and transmission and reception of various kinds of information to and from a settlement server of a payment provider etc. in cashless settlement.

When receiving the error information from the server apparatus 2 as a response to the transaction information request, the checkout machine 5 displays the error information on a display unit of the machine itself. The displayed error information can be information representing a status that payment is disabled because the attendant check is not completed. The checkout machine 5 transmits and receives various kinds information to and from the server apparatus 2.

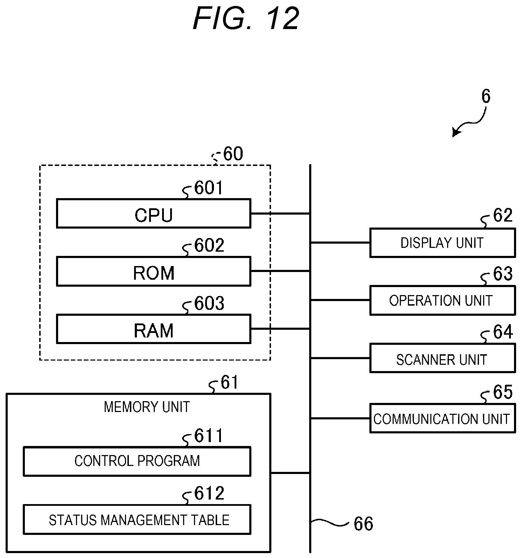

The attendant PC 6 is operated by a store clerk such as an attendant and an example of an attendant terminal. The attendant PC 6 includes a scanner unit 64 (see FIG. 12). The attendant PC 6 reads the transaction code from the checkout barcode in the attendant check window displayed on the portable terminal 4 by the scanner unit 64. The attendant PC 6 acquires the transaction information corresponding to the read transaction code from the server apparatus 2 and displays the information on a display unit 62 (see FIG. 12).

The attendant PC 6 may receive input of the terminal code by an operation unit 63 in place of reading of the transaction code by the scanner unit 64. The terminal code is displayed on the attendant check window of the portable terminal 4. The terminal code is correlated with the transaction code in the server apparatus 2, and the attendant PC 6 may acquire the transaction information corresponding to the transaction code also by transmitting the terminal code to the server apparatus 2. Thereby, the attendant PC 6 may acquire the necessary transaction information from the server apparatus 2 even if the scanner unit 64 is out of order.

The attendant performs the attendant check based on the transaction information displayed in the attendant PC 6. For example, if the transaction object includes merchandise requiring age verification, the attendant performs age verification of the customer. When the transaction object includes unregistered merchandise, the attendant confirms the unregistered merchandise. The unregistered merchandise is merchandise having merchandise information corresponding to the merchandise code not registered in the merchandise master for some reason. When the attendant check is completed, a check completion entry is made in the attendant PC 6. If the check completion entry is made, the attendant PC 6 transmits check information to the server apparatus 2.

Upon confirming the unregistered merchandise, the attendant makes the check completion entry in the attendant PC 6, and then, moves to the checkout machine 5 or a dedicated register with the customer. Then, the attendant operates the checkout machine 5 or the dedicated register and manually registers the merchandise information of the unregistered merchandise as a part of the transaction information.

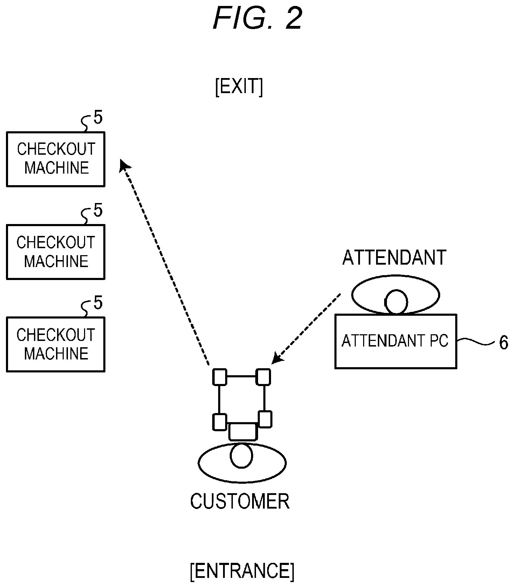

Here, referring to FIG. 2, the operational control in the store is explained. FIG. 2 shows a checkout area of the store. Near the entrance of the checkout area, in other words, on a path in which the customer moves to a checkout machine 5, the attendant and the attendant PC 6 operated by the attendant are placed.

Before the payment at the checkout machine 5, the customer presents the attendant check window displayed on the portable terminal 4 to the attendant. The attendant scans the checkout barcode of the attendant check window with the scanner unit 64 of the attendant PC 6. The attendant PC 6 acquires the transaction information corresponding to the checkout barcode from the server apparatus 2 and displays the information on the display unit 62. The attendant performs the attendant check based on the displayed transaction information. The attendant completes the attendant check, and then, performs check completion entry in the attendant PC 6. The attendant PC 6 transmits check completion information to the server apparatus 2.

After the attendant check is completed, the customer becomes able to pay at one of the available checkout machines 5. If a customer tries to pay at a checkout machine 5 without clearing the attendant check process, error information will be displayed at the checkout machine 5 and the customer will be unable to complete transaction payment processing. In this case, the customer must return to the position of the attendant PC 6 and undergo the attendant check. The attendant may perform the attendant check for each customer in the location where the attendant PC 6 is placed, and the check work is thus easier.

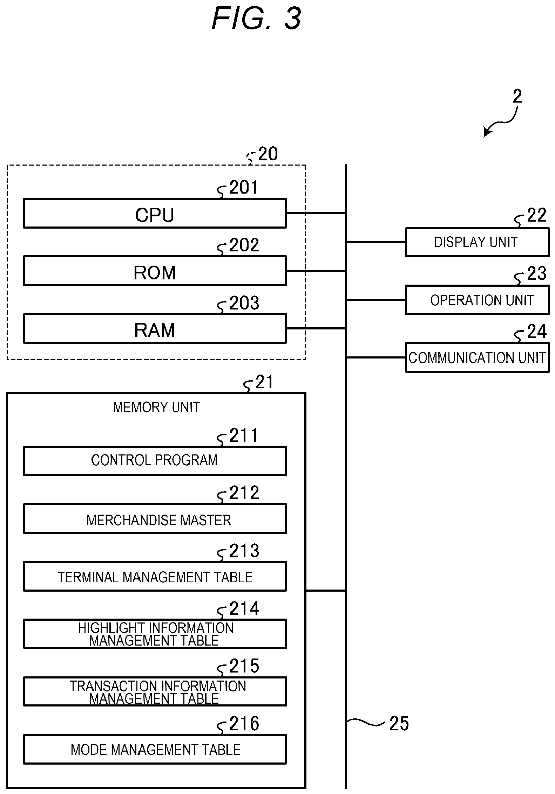

FIG. 3 is a block diagram of the server apparatus 2. The server apparatus 2 includes a control unit 20, a memory unit 21, a display unit 22, an operation unit 23, and a communication unit 24. The control unit 20, the memory unit 21, the display unit 22, the operation unit 23, and the communication unit 24 are connected to one another via a bus 25 or the like.

The control unit 20 includes a CPU (Central Processing Unit) 201, a ROM (Read Only Memory) 202, and a RAM (Random Access Memory) 203. The CPU 201, the ROM 202, and the RAM 203 are connected to one another via the bus 25.

The CPU 201 controls the entire operation of the server apparatus 2. The ROM 202 stores various programs including a program used for configuring the CPU 201 and various kinds of data. The RAM 203 is used as a work area of the CPU 201 and loads various programs and various kinds of data stored in the ROM 202 and the memory unit 21. The control unit 20 executes various kinds of control processing of the server apparatus 2 by the CPU 201 operating according to control programs stored in the ROM 202 and/or the memory unit 21 and then loaded in the RAM 203.

The memory unit 21 can be an HDD (Hard Disk Drive) or a flash memory and maintains the memory contents if the power is shut down. The memory unit 21 stores a control program 211, a merchandise master 212, a terminal management table 213, a highlight information management table 214, a transaction information management table 215, and a mode management table 216.

The control program 211 is a program for realizing a function of transmitting and receiving information to and from an external apparatus including the portable terminal 4, the checkout machine 5, and the attendant PC 6, a function of managing the transaction information with respect to each customer, a function of receiving the transaction information request and determining whether the attendant check of the object transaction of the transaction information request is completed, or the like.

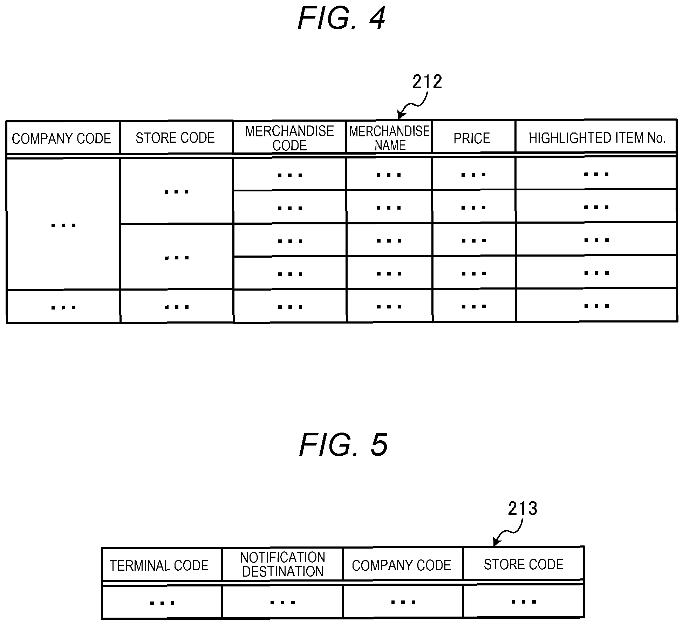

The merchandise master 212 is a master file in which information of merchandise handled in each store is stored. The merchandise master 212 is updated based on the information acquired from each store. The merchandise handled in each store changes from day to day, and the merchandise master 212 is updated appropriately for the stores. FIG. 4 shows a data configuration of the merchandise master. The merchandise master 212 correlates and stores company codes, store codes, merchandise codes, merchandise names, prices, and highlighted items Nos.

The company code is information for identification of a company running the store using the transaction management system 1. The store code is information for identification of the store using the transaction management system 1. When a plurality of stores of one company use the transaction management system 1, the company code is correlated to a plurality of store codes.

The merchandise code is information for identification of merchandise. A plurality of merchandise items are sold in one store, and the store code is correlated with a plurality of merchandise codes. The merchandise name is the name of merchandise. The price is information representing the price of merchandise. The highlighted item No. is information identifying a "highlighted item" on which the attendant should focus attention for an attendant check. The highlighted item No. may be set only for the merchandise to be carefully checked by the attendant (referred to as "highlighted merchandise"). The merchandise name, the price, and the highlighted item No. are correlated to a merchandise code

The terminal management table 213 is a data table for management of the portable terminal 4 used in the mobile self-service checkout system 3. FIG. 5 shows a data configuration of the terminal management table 213. The terminal management table 213 correlates and stores terminal codes, notification destinations, company codes, and store codes.

The terminal code is information for identification of the portable terminal 4 using the transaction management system 1. When receiving the entry information from the portable terminal 4, the server apparatus 2 issues a terminal code to the portable terminal 4 and registers the code in the terminal management table 213. As the terminal code, an identification number such as an IMEI (International Mobile Equipment Identity) of the portable terminal 4 itself or the like may be employed. However, there is an advantage when a terminal code dedicated for use in the transaction management system 1 is issued, so the number of digits of the terminal code may be reduced and the operation when the manual entry of the terminal code is necessary may be easier.

The notification destination is information representing a notification destination of the portable terminal 4, such as a communication address of the portable terminal 4. The company code is information for identification of a company running the store where the portable terminal 4 is present. The store code is information for identification of the store where the portable terminal 4 is present. The notification destination, the company code, and the store code are registered based on the entry information received from the portable terminal 4. Note that, of the information registered in the terminal management table 213, information relating to the terminal code of the customer who completes the payment for the transaction may be sequentially erased. In this case, the same terminal code may be used many times and the number of digits of the terminal code for use may be reduced.

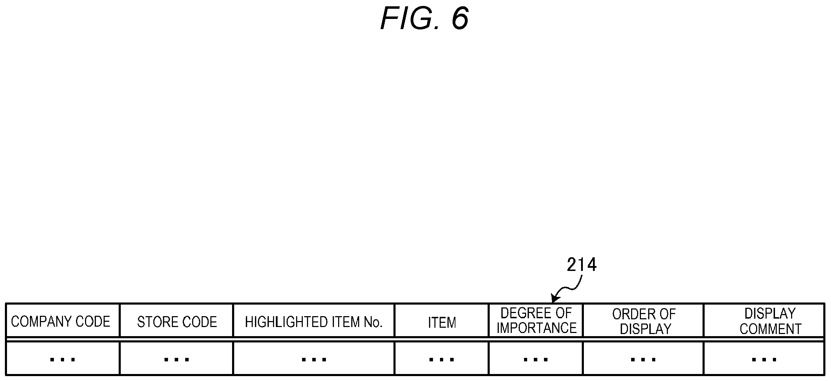

The highlight information management table 214 is a data table for management of highlighted items in highlighted merchandise. The highlight information management table 214 is updated based on the information acquired from each store. The attendant PC 6 displays a transaction statement window based on the information registered in the highlight information management table 214. FIG. 6 shows a data configuration of the highlight information management table 214. The highlight information management table 214 correlates and stores company codes, store codes, highlighted items Nos., items, degrees of importance, the order of display, and display comments.

As described above, the company code is information for identification of a particular company and the store code is information for identification of a particular store. The highlighted item No. identifies an item on which attention should be focused in an attendant check. The "item" value is information representing the nature of the highlighted item e.g., merchandise requiring age verification, unregistered merchandise, or the like. The degree of importance represents the degree of importance of the highlighted item. For example, "1" is registered for a highlighted item at a high degree of importance and "0" is registered for a low importance merchandise. The order of display indicates the order of display in the transaction statement window of the attendant PC 6. The display comment is information representing a comment to be included in the transaction statement window of the attendant PC 6.

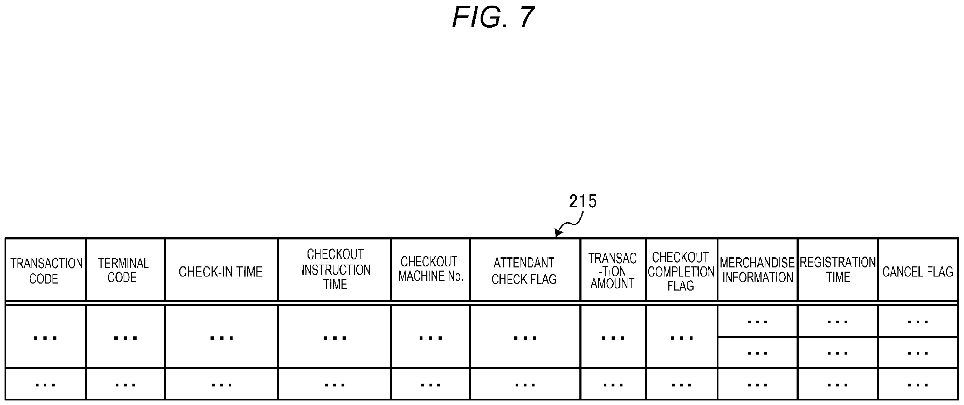

The transaction information management table 215 is a data table for management of transaction information of each store with respect to one transaction. The transaction information management table 215 is updated based on the information from the portable terminal 4, the checkout machine 5, and the attendant PC 6. FIG. 7 shows a data configuration of the transaction information management table 215. The transaction information management table 215 correlates and stores transaction codes, terminal codes, check-in times, checkout instruction times, checkout machine Nos., attendant check flags, transaction amounts, checkout completion flags, merchandise information, registration times, and cancel flags.

The transaction code is information for identification of a transaction. The terminal code is information for identification of the portable terminal 4. The server apparatus 2 receives entry information from the portable terminal 4, and then, issues and registers the transaction code and the terminal code in the transaction information management table 215. The check-in time is information representing a time when a customer enters the store, for example, the time when the server apparatus 2 received the entry information from the portable terminal 4.

The checkout instruction time is information representing a time when the server apparatus 2 received a checkout instruction from the portable terminal 4. The checkout machine No. is information for identification of a checkout machine 5 executing the checkout processing relating to the transaction code. In other words, the checkout machine No. is information for identification of the checkout machine 5 that read the transaction code from the checkout window of the portable terminal 4. The checkout machine No. is registered based on the transaction information request from the checkout machine 5.

The attendant check flag is information representing whether an attendant check has been completed. If the attendant check has been completed, "1" is registered and, if not, "0" is registered. The attendant check flag is rewritten to "1" based on check information acquired from the attendant PC 6. The attendant check flag with "1" registered is an example of check completion information registered after an attendant check is completed.

The transaction amount is a total of merchandise prices in the transaction. The checkout completion flag indicates whether a payment relating to the transaction has been completed, in other words, whether checkout processing by the checkout machine 5 was completed. As the checkout completion flag, "1" is registered when the payment relating to the transaction is completed, and "0" is registered otherwise. The checkout completion flag is rewritten to "1" based on a checkout completion notification acquired from the checkout machine 5.

The merchandise information includes a merchandise code, a merchandise name, and a price. If a plurality of merchandise items are being purchased in one transaction, a plurality of pieces of merchandise information are registered to transaction code. The registration time is then time when the merchandise information was registered. The cancel flag is information representing whether merchandise information was cancelled. If merchandise information is cancelled, "1" is registered and, if not, "0" is registered. The cancel flag is rewritten to "1" based on cancel information from the portable terminal 4. The cancel information can be an instruction to cancel a merchandise registration and contains a merchandise code for the merchandise registration that was cancelled.

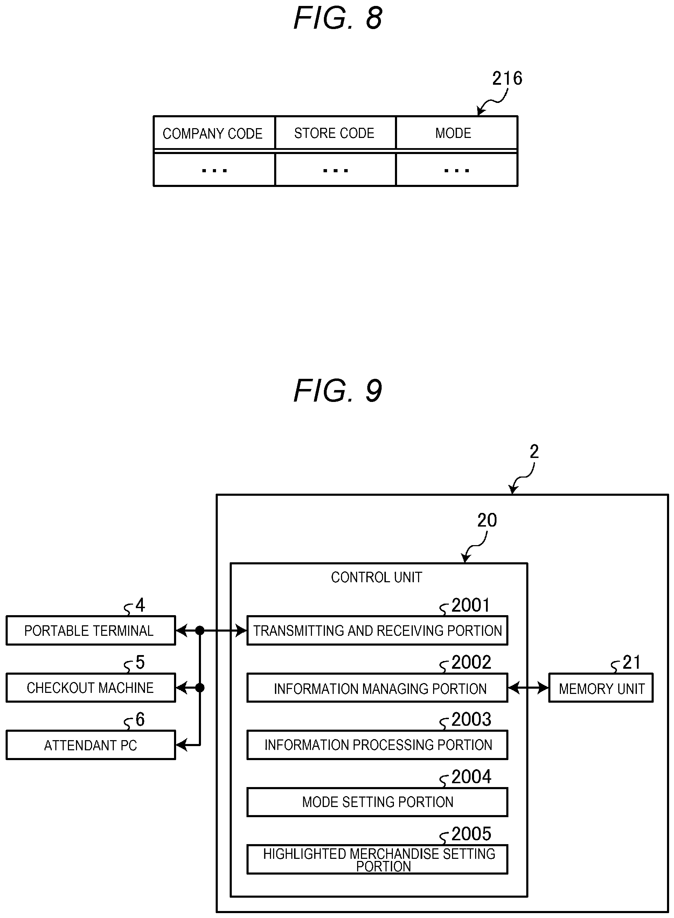

The mode management table 216 is a data table for management of a mode set in the mobile self-service checkout system 3 of each store. The mode management table 216 is updated based on the information acquired from each store. FIG. 8 shows a data configuration of the mode management table 216. The mode management table 216 correlates and stores company codes, store codes, and modes.

The company code identifies the company running a store, and the store code identifies the store. The mode value indicates the mode set in the mobile self-service checkout system 3, for example, one of a front check mode or a normal mode can be set.

In the front check mode an attendant is to perform a check before the customer pays at the checkout machine 5 as described in FIG. 2. Specifically, the front check mode permits a payment by the customer at the checkout machine 5 but on the condition that the customer has already undergone an attendant check. The normal mode permits a payment by the customer at the checkout machine 5 unless the customer still needs to undergo an attendant check. Each store can select the front check mode or the normal mode according to the operational control needs.

Returning to FIG. 3, a hardware configuration of the server apparatus 2 is explained.

The display unit 22 can include a liquid crystal panel and displays various kinds of information. The display unit 22 displays information stored in the merchandise master 212, the terminal management table 213, the highlight information management table 214, the transaction information management table 215, and/or the mode management table 216 as necessary.

The operation unit 23 is for inputting information to the control unit 20. The operation unit 23 may be or include a keyboard, a touch panel, and/or a mouse.

The communication unit 24 is an interface for communication with an external apparatus such as the portable terminal 4, the checkout machine 5, and the attendant PC 6. The control unit 20 is connected to the external apparatus via the communication unit 24, and thereby, can transmit and receive information (data) to and from the external apparatus.

Subsequently, a functional configuration of the server apparatus 2 is explained. FIG. 9 is a block diagram showing functional aspects of the control unit 20 of the server apparatus 2. The control unit 20 functions as a transmitting and receiving portion 2001, an information managing portion 2002, an information processing portion 2003, a mode setting portion 2004, and a highlighted merchandise setting portion 2005 by the CPU 201 operating according to the control programs stored in the ROM 202 and the memory unit 21. Note that these respective functions may be configured by hardware such as dedicated circuits.

The transmitting and receiving portion 2001 transmits and receives various kinds of information to and from the portable terminal 4, the checkout machine 5, and the attendant PC 6. For example, the transmitting and receiving portion 2001 receives entry information from the portable terminal 4 and transmits the terminal code, the transaction code, and the mode information to the portable terminal 4 as a transmission source of the entry information.

The transmitting and receiving portion 2001 receives a registration request containing the terminal code and the merchandise code from the portable terminal 4, and transmits the registered merchandise information as a response to the portable terminal 4 as a transmission source of the registration request. The transmitting and receiving portion 2001 receives a checkout instruction containing the transaction code from the portable terminal 4, and transmits a transaction amount of the transaction identified by the transaction code and an attendant check window display instruction to the portable terminal 4 as a transmission source of the checkout instruction. The checkout instruction is information representing a merchandise registration is finished for one transaction. The attendant check window display instruction is information for instructing the portable terminal 4 to display the checkout barcode to be read by the attendant PC 6. Note that the calculation of the transaction amount may be performed in the portable terminal 4.

The transmitting and receiving portion 2001 receives a store transaction information request containing the store code from the attendant PC 6 regularly at short time intervals and transmits transaction information of the store identified by the store code as a response. Thereby, the attendant PC 6 can acquire the transaction information of the store itself substantially in real time.

The transmitting and receiving portion 2001 receives check information from the attendant PC 6. The check information is information representing that an attendant check is completed and contains a transaction code. The transmitting and receiving portion 2001 transmits a checkout window display instruction to the portable terminal 4 of the customer finished with the attendant check based on the received check information. The checkout window display instruction is information for instructing the portable terminal 4 to display a checkout barcode to be read by the checkout machine 5.

The transmitting and receiving portion 2001 receives a transaction information request containing the transaction code from the checkout machine 5 and transmits transaction information identified by the transaction code as a response. The transmitting and receiving portion 2001 functions as a receiving portion receiving a transaction information request. Further, the transmitting and receiving portion 2001 functions as an outputting portion outputting transaction information. The transmitting and receiving portion 2001 receives a checkout completion notification from the checkout machine 5. The checkout completion notification is information representing that a payment relating to a transaction is completed and contains a transaction code.

The information managing portion 2002 manages various kinds of information including information received by the transmitting and receiving portion 2001. Here, managing information refers to writing or reading of various kinds of information (data) in or out of the memory unit 21.

For example, when the transmitting and receiving portion 2001 receives entry information, the information managing portion 2002 writes a terminal code and a transaction code in the terminal management table 213 and the transaction information management table 215. Further, when the transmitting and receiving portion 2001 receives entry information, the information managing portion 2002 reads out mode information corresponding to a store code contained in the entry information from the mode management table 216.

When the transmitting and receiving portion 2001 receives a registration request, the information managing portion 2002 registers merchandise information corresponding to a merchandise code contained in the registration request in the transaction information management table 215. Specifically, the information managing portion 2002 reads out a company code and a store code corresponding to a terminal code contained in the registration request with reference to the terminal management table 213. Then, the information managing portion 2002 reads out merchandise information correlated with the company code and the store code and corresponding to the merchandise code contained in the registration request from the merchandise master 212 and registers the merchandise information in the transaction information management table 215. The information managing portion 2002 functions as a registering portion executing merchandise registration.

When the transmitting and receiving portion 2001 receives a store transaction information request, the information managing portion 2002 extracts transaction information of a store identified by a store code contained in the store transaction information request. Specifically, the information managing portion 2002 reads out all terminal codes corresponding to the store code from the terminal management table 213. The information managing portion 2002 reads out all transaction information corresponding to the read out terminal codes from the transaction information management table 215.

When the transmitting and receiving portion 2001 receives a transaction information request, the information managing portion 2002 reads out transaction information identified by a transaction code contained in the transaction information request. When the transmitting and receiving portion 2001 receives check information, the information managing portion 2002 rewrites an attendant check flag corresponding to a transaction code contained in the check information to "1" in the transaction information management table 215. The information managing portion 2002 writes or reads other information in and out of the memory unit 21 as necessary.

As described above, the information managing portion 2002 manages the transaction information management table 215 for correlating and storing transaction identification information (transaction code or terminal code), transaction information, and check completion information (attendant check flag) and is an example of a transaction managing portion.

The information processing portion 2003 executes various kinds of information processing. For example, the information processing portion 2003 calculates a transaction amount of one transaction. Further, the information processing portion 2003 performs assignment processing of a transaction code and a terminal code and issues these transaction code and terminal code. The information processing portion 2003 determines whether an attendant check is performed on a transaction with reference to the transaction information management table 215.

The mode setting portion 2004 sets the mode of the mobile self-service checkout system 3 of each store to one of the front check mode or the normal mode. Specifically, the mode setting portion 2004 registers information representing the front check mode or the normal mode in the mode management table 216 based on information acquired from the store.

The highlighted merchandise setting portion 2005 sets highlighted merchandise from merchandise registered in the merchandise master 212. Specifically, the highlighted merchandise setting portion 2005 registers information relating to highlighted merchandise in the merchandise master 212 and the highlight information management table 214 based on information acquired from a store.

FIG. 10 is a block diagram of the portable terminal 4. The portable terminal 4 includes a control unit 40, a memory unit 41, a display unit 42, an operation unit 43, an imaging unit 44, and a communication unit 45. The control unit 40, the memory unit 41, the display unit 42, the operation unit 43, the imaging unit 44, and the communication unit 45 are connected to one another via a bus 46 or the like.

The control unit 40 includes a CPU 401, a ROM 402, and a RAM 403. The CPU 401, the ROM 402, and the RAM 403 are connected to one another via the bus 46.

The CPU 401 controls the entire operation of the portable terminal 4. The ROM 402 stores various programs including a program used for driving of the CPU 401 and various kinds of data. The RAM 403 is used as a work area of the CPU 401 and loads various programs and various kinds of data stored in the ROM 402 and the memory unit 41. The control unit 40 executes various kinds of control processing of the portable terminal 4 by the CPU 401 operating according to control programs stored in the ROM 402 and the memory unit 41 and loaded in the RAM 403.

The memory unit 41 includes a memory medium such as an HDD or a flash memory and maintains the memory contents even if the power is shut down. The memory unit 41 stores a control program 411, a terminal code portion 412, a transaction information portion 413, and a mode information portion 414.

The control program 411 is an application program for mobile self-service checkout system or the like. The application program for mobile self-service checkout system is for controlling the portable terminal 4 to function as an input device for merchandise registration. Further, the application program for mobile self-service checkout system is for controlling the portable terminal 4 to function as a checkout barcode display device.

The terminal code portion 412 stores a terminal code received from the server apparatus 2. The terminal code is issued by the server apparatus 2 according to entry information from the portable terminal 4.

The transaction information portion 413 stores transaction information in which a transaction code received from the server apparatus 2 and merchandise information registered in the server apparatus 2 are correlated. Specifically, merchandise information registered in the server apparatus 2 is correlated with a transaction code and sequentially registered in the transaction information portion 413.

The mode information portion 414 stores mode information received from the server apparatus 2. In the mode information portion 414, mode information received from the server apparatus 2 to correspond to entry information from the portable terminal 4 is stored. The mode information is information representing a mode of the mobile self-service checkout system 3 of a store where the portable terminal 4 is present.

When the portable terminal 4 receives a checkout completion notification from the server apparatus 2, the information stored in the terminal code portion 412, the transaction information portion 413, and the mode information portion 414 is cleared. The terminal code portion 412, the transaction information portion 413, and the mode information portion 414 store new information with respect to each transaction.

The display unit 42 can include a liquid crystal panel and displays various kinds of information. The display unit 42 displays merchandise information of merchandise registered in the server apparatus 2, a total amount of registered merchandise, etc. Further, the display unit 42 displays an attendant check window and a checkout window. In these attendant check window and checkout window, checkout barcodes to be read by the attendant PC 6 and the checkout machine 5 are displayed.

The operation unit 43 can include or be a touch panel provided on the surface of the display unit 42 and sends information to the control unit 40 according to a position touched by a user. If a customer operates an operator (e.g., a button, icon, etc.) displayed on the display unit 42, the operation unit 43 sends information according to the touched operator to the control unit 40.

The imaging unit 44 images a two-dimensional code, a merchandise barcode, etc. displayed at the entry of a store and inputs imaging data to the control unit 40. The control unit 40 reads store information from an image of the two-dimensional code and reads a merchandise code from an image of the merchandise barcode. Note that, if the portable terminal 4 recognizes a merchandise code using the so-called object recognition, the imaging unit 44 images and inputs an appearance of merchandise to the control unit 40.

The communication unit 45 is an interface for communication with an external apparatus including the server apparatus 2. The control unit 40 is connected to the external apparatus via the communication unit 45, and thereby, can transmit and receive information (data) to and from the external apparatus.

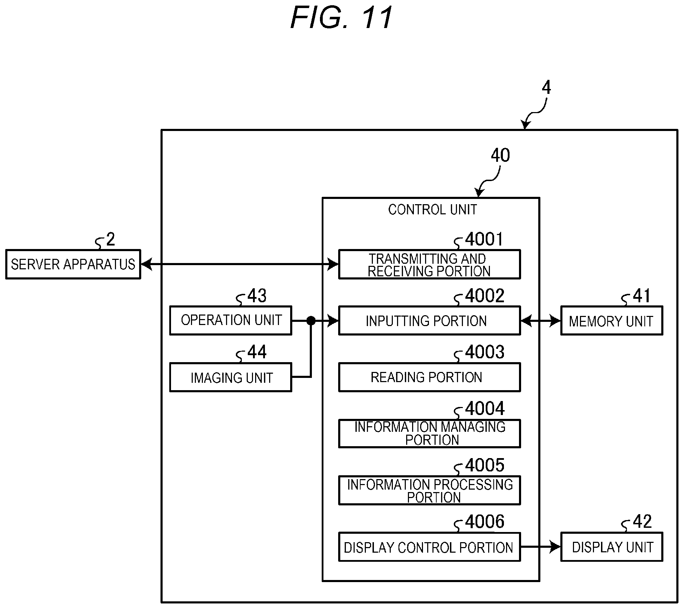

FIG. 11 is a block diagram depicting certain functional aspects of the control unit 40 of the portable terminal 4. The control unit 40 functions as a transmitting and receiving portion 4001, an inputting portion 4002, a reading portion 4003, an information managing portion 4004, an information processing portion 4005, and a display control portion 4006 by the CPU 401 operating according to control programs stored in the ROM 402 and/or the memory unit 41. Note that these respective described functions in this context may be provided by hardware such as dedicated circuits.

The transmitting and receiving portion 4001 transmits and receives various kinds of information to and from the server apparatus 2. For example, the transmitting and receiving portion 4001 transmits entry information to the server apparatus 2 and receives a terminal code, a transaction code, and mode information from the server apparatus 2.

The transmitting and receiving portion 4001 transmits a registration request containing a terminal code and a merchandise code to the server apparatus 2 and receives registered merchandise information and a transaction amount from the server apparatus 2 as a response. The transmitting and receiving portion 4001 transmits a checkout instruction containing a transaction code to the server apparatus 2 and receives a transaction amount of a transaction identified by the transaction code and an attendant check window display instruction from the server apparatus 2. The transmitting and receiving portion 4001 receives a checkout window display instruction and a checkout completion notification from the server apparatus 2.

Various kinds of information are received from the operation unit 43 and the imaging unit 44 by the inputting portion 4002. For example, a transaction start instruction and a checkout instruction are input from the operation unit 43 to the inputting portion 4002. Further, imaging data of a two-dimensional code displayed at the entry of the store, imaging data of a merchandise barcode, etc. are input from the imaging unit 44 to the inputting portion 4002.

The reading portion 4003 extracts a two-dimensional code from the imaging data input to the inputting portion 4002 and decodes the two-dimensional code and reads store information. Further, the reading portion 4003 extracts a merchandise barcode from the imaging data input to the inputting portion 4002 and decodes the merchandise barcode and reads a merchandise code. Note that decoding of the above-described two-dimensional code and merchandise barcode may be performed by the server apparatus 2 in other examples. In such a case, the transmitting and receiving portion 4001 transmits the imaging data of the two-dimensional code and the barcode to the server apparatus 2 and receives store information and a merchandise code from the server apparatus 2.

The information managing portion 4004 manages various kinds of information including the information received by the transmitting and receiving portion 4001. Here, managing information refers to writing or reading various kinds of information (data) in or out of the memory unit 41.

For example, the information managing portion 4004 writes a terminal code received by the transmitting and receiving portion 4001 in the terminal code portion 412. Further, the information managing portion 4004 writes a transaction code and merchandise information received by the transmitting and receiving portion 4001 in the transaction information portion 413. Specifically, when the transmitting and receiving portion 4001 receives a transaction code, the information managing portion 4004 writes the transaction code in the transaction information portion 413. Then, at each time when the transmitting and receiving portion 4001 receives merchandise information registered by the server apparatus 2, the information managing portion correlates and writes the merchandise information with the transaction code in the transaction information portion 413. The information managing portion 4004 writes mode information received by the transmitting and receiving portion 4001 in the mode information portion 414.

The information processing portion 4005 executes various kinds of processing. For example, if the transmitting and receiving portion 4001 receives an attendant check window display instruction from the server apparatus 2, the information processing portion 4005 generates a checkout barcode for display on the display unit 42.

The display control portion 4006 controls the display unit 42 to display various kinds of information. For example, the display control portion 4006 controls the display unit 42 to display merchandise information and a transaction amount stored in the transaction information portion 413. The transaction amount may be acquired from the server apparatus 2 or may be calculated by the information processing portion 4005 based on transaction information stored in the transaction information portion 413.

When information representing the front check mode is registered in the mode information portion 414, if a checkout barcode is generated by the information processing portion 4005, the display control portion 4006 controls the display unit 42 to display an attendant check window. Further, when the transmitting and receiving portion 4001 receives a checkout window display instruction, the display control portion 4006 controls the display unit 42 to display a checkout window.

When information representing the normal mode is registered in the mode information portion 414, if a checkout barcode is generated by the information processing portion 4005, the display control portion 4006 controls the display unit 42 not to display an attendant check window, but to display a checkout window.

FIG. 12 is a block diagram of the attendant PC 6. The attendant PC 6 includes a control unit 60, a memory unit 61, a display unit 62, an operation unit 63, a scanner unit 64, and a communication unit 65. The control unit 60, the memory unit 61, the display unit 62, the operation unit 63, the scanner unit 64, and the communication unit 65 are connected to one another via a bus 66 or the like.

The control unit 60 includes a CPU 601, a ROM 602, and a RAM 603. The CPU 601, the ROM 602, and the RAM 603 are connected to one another via the bus 66.

The CPU 601 controls the entire operation of the attendant PC 6. The ROM 602 stores various programs including a program used for driving of the CPU 601 and various kinds of data. The RAM 603 is used as a work area of the CPU 601 and loads various programs and various kinds of data stored in the ROM 602 and the memory unit 61. The control unit 60 executes various kinds of control processing of the attendant PC 6 by the CPU 601 operating according to control programs stored in the ROM 602 and/or the memory unit 61 and then loaded in the RAM 603.

The memory unit 61 can be an HDD or a flash memory and maintains the memory contents even if the power is shut down. The memory unit 61 stores a control program 611 and a status management table 612.

The control program 611 is a program for realizing a function of transmitting and receiving information to and from the server apparatus 2, a function of managing a status of a customer of a store, etc.

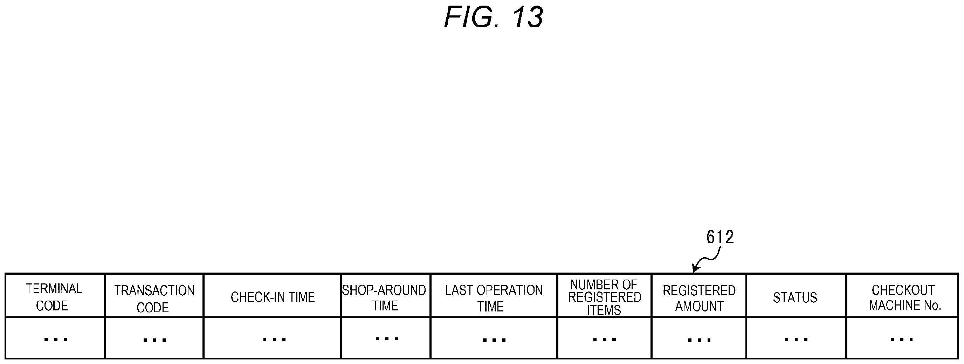

The status management table 612 is a data table for management of a status of a customer not completing a payment. The status management table 612 is updated as needed based on information acquired from the server apparatus 2. FIG. 13 shows a data configuration of the status management table 612. The status management table 612 correlates and stores terminal codes, transaction codes, check-in times, shop-around times, last operation times, numbers of registered items, registered amounts, statuses, and checkout machine Nos.

As described above, the transaction code is information for identification of a transaction, and the terminal code is information for identification of the portable terminal 4. The check-in time is information representing a time when a customer enters the store. The shop-around time is a time from the entry of the customer and calculated from a current time and the check-in time. The last operation time is information representing a time when the customer last operates the portable terminal 4. Specifically, the last operation time is information representing the latest time of an operation, such as the check-in time, a registration time, or a checkout instruction time, as the case may be.

The number of registered items is information representing the number of registered merchandise items. The registered amount is information representing a total amount due for the registered merchandise. The registered amount can have the same meaning as the transaction amount and may include tax or not. The status shows a status of a customer and "shopping" or "checking out" is registered. "Shopping" displays a status that one or more merchandise items are registered and no checkout instruction is input to the portable terminal 4. "Checking out" displays a status that a checkout instruction is input to the portable terminal 4 and a payment is not completed. The checkout machine No. is information for identification of the checkout machine 5 executing checkout processing of the corresponding transaction No.

Returning to FIG. 12, the hardware configuration of the attendant PC 6 is explained.

The display unit 62 can include a liquid crystal panel and displays various kinds of information. For example, the display unit 62 displays a transaction list window, a transaction statement window, a guidance window, and a highlight setting window. The transaction list window is a window showing a list of statuses of customers. The transaction statement window is a window showing a statement of transactions of one customer. The guidance window is a window displaying a guidance for an attendant at an attendant check. The highlight setting window is a window for setting highlighted merchandise. The details of these respective windows will be described later.

The operation unit 63 is for inputting information to the control unit 60 including a keyboard, a touch panel, and a mouse. For example, the operation unit 63 inputs information for setting the mode of the mobile self-service checkout system 3 and information for setting the highlighted merchandise to the control unit 60.

The scanner unit 64 scans a checkout barcode displayed in the attendant check window of the portable terminal 4 and inputs scanned data to the control unit 60. The scanner unit 64 may include an imaging unit capturing an image. In this case, the scanner unit 64 inputs imaging data to the control unit 60.

The communication unit 65 is an interface for communication with an external apparatus including the server apparatus 2. The control unit 60 is connected to the external apparatus via the communication unit 65, and thereby, can transmit and receive information (data) to and from the external apparatus.

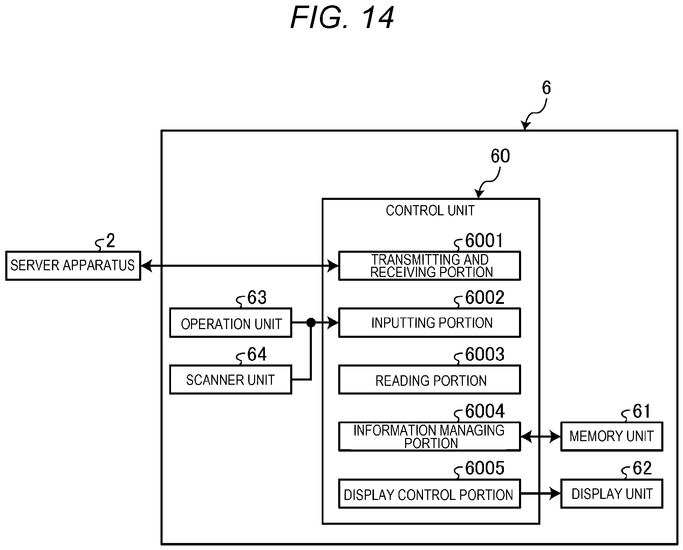

FIG. 14 is a block diagram depicting certain functional aspects of the control unit 60 of the attendant PC 6. The control unit 60 functions as a transmitting and receiving portion 6001, an inputting portion 6002, a reading portion 6003, an information managing portion 6004, and a display control portion 6005 by the CPU 601 operating according to the control programs stored in the ROM 602 and/or the memory unit 61. Note that these respective described functions may be provided by hardware such as dedicated circuits.

The transmitting and receiving portion 6001 transmits and receives various kinds of information to and from the server apparatus 2. For example, the transmitting and receiving portion 6001 transmits a store transaction information request containing a store code to the server apparatus 2 and receives transaction information corresponding to the store code as a response thereto. The transmitting and receiving portion 6001 transmits a transaction information request containing a transaction code to the server apparatus 2 and receives transaction information corresponding to the transaction code as a response thereto. Further, the transmitting and receiving portion 6001 transmits check information to the server apparatus 2.

The transmitting and receiving portion 6001 transmits various kinds of setting information to the server apparatus 2. For example, the transmitting and receiving portion 6001 transmits mode setting information of the mobile self-service checkout system 3 to the server apparatus 2. Further, the transmitting and receiving portion 6001 transmits setting information for setting highlighted merchandise to the server apparatus 2. Note that the attendant PC 6 may transmit and receive information to and from the server apparatus 2 by a function of a dedicated application program or transmit and receive information to and from the server apparatus 2 by accessing a Web site using a browser.

Various kinds of information are received from the operation unit 63 and the scanner unit 64 by the inputting portion 6002. For example, check completion information is input from the operation unit 63 to the inputting portion 6002. The check completion information is information representing that an attendant check has been completed. Furthermore, scanned data of the checkout barcode displayed in the attendant check window is input from the scanner unit 64 to the inputting portion 6002.

The reading portion 6003 decodes the scanned data input to the inputting portion 6002 and reads a transaction code. Note that decoding of the scanned data may be performed by the server apparatus 2. In this case, the transmitting and receiving portion 6001 transmits the scanned data to the server apparatus 2 and receives the transaction code read by the server apparatus 2.

The information managing portion 6004 manages various kinds of information including the information received by the transmitting and receiving portion 6001. Here, managing information refers to writing or reading various kinds of information (data) in or out of the memory unit 61.

For example, the information managing portion 6004 writes necessary information in the status management table 612 based on the transaction information of the store received by the transmitting and receiving portion 6001. Further, the information managing portion 6004 reads out information displayed on the display unit 62 from the status management table 612 as necessary.

The display control portion 6005 controls the display unit 62 to display various kinds of information. For example, the display control portion 6005 controls the display unit 62 to display a transaction list window, a transaction statement window, a guidance window, and a highlight setting window. The transaction list window, transaction statement window, guidance window, and highlight setting window can be windows displayed by access to a Web site provided by the server apparatus 2.

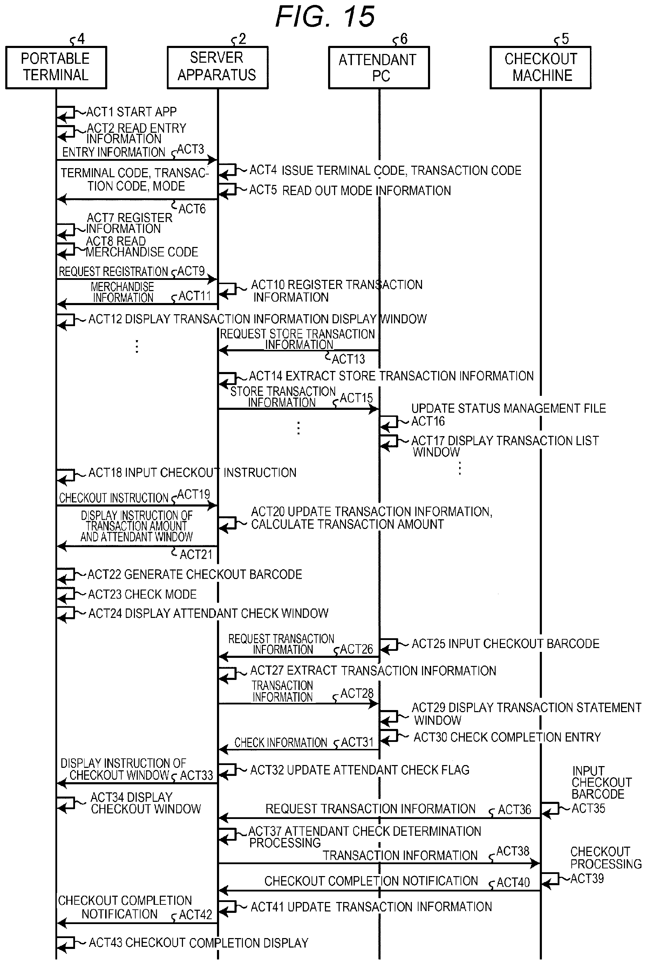

Next, an outline of an operation of the transaction management system 1 will be explained. FIG. 15 is a sequence chart showing a flow of the operation of the transaction management system 1. The sequence chart shows a flow of an operation when the mode of the mobile self-service checkout system 3 is set to the front check mode. The sequence chart shows a flow of an operation when a customer undergoes an attendant check before payment at the checkout machine 5.

The customer starts the application program for mobile self-service checkout system (Act 1). Then, the customer reads entry information using the portable terminal 4 and performs transaction start entry (Act 2). The portable terminal 4 transmits the entry information containing a company code, a store code, and a check-in time to the server apparatus 2 (Act 3).

The server apparatus 2 issues a terminal code and a transaction code (Act 4). Concurrently, the server apparatus 2 registers necessary information in the terminal management table 213 and the transaction information management table 215 based on the received entry information. The server apparatus 2 reads out mode information of the store code contained in the entry information from the mode management table 216 (Act 5). The server apparatus 2 transmits the issued terminal code and transaction code and the read out mode information to the portable terminal 4 (Act 6).

The portable terminal 4 registers the received information (Act 7). Specifically, the portable terminal 4 respectively registers the received terminal code in the terminal code portion 412, the transaction code in the transaction information portion 413, and the mode information in the mode information portion 414. The customer images a merchandise barcode using the imaging unit 44, and thereby, the portable terminal 4 reads a merchandise code for identification of the merchandise (Act 8). A merchandise code of an item with no barcode can be input manually from the operation unit 43. The portable terminal 4 transmits a registration request containing the terminal code and the merchandise code to the server apparatus 2 (Act 9). The portable terminal 4 may transmit a registration request containing a transaction code in place of the terminal code or with the terminal code to the server apparatus 2. In the following explanation, the portable terminal 4 also transmits the terminal code when transmitting information to the server apparatus 2.

The server apparatus 2 executes merchandise registration based on the registration request. Specifically, the server apparatus 2 reads out merchandise information corresponding to the merchandise code contained in the registration request from the merchandise master 212 and registers the information in the transaction information management table 215 (Act 10). The server apparatus 2 transmits the read merchandise information to the portable terminal 4 (Act 11).

The portable terminal 4 stores the received merchandise information in the transaction information portion 413 and displays a transaction information display window (Act 12). The portable terminal 4 may acquire transaction information containing all merchandise information for the transaction registered in the transaction information management table 215 each time when reading a merchandise code.

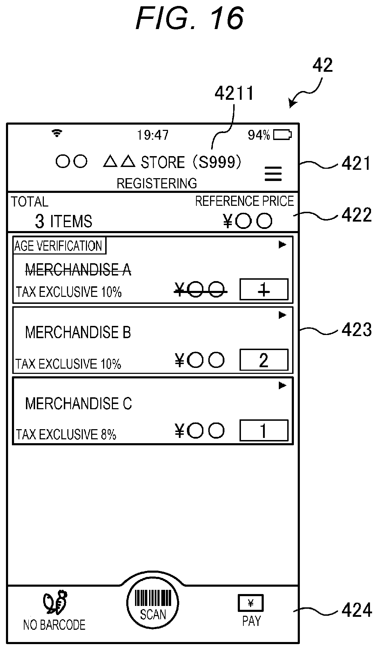

Here, the transaction information display window is explained. FIG. 16 shows the transaction information display window displayed by the portable terminal 4. The display unit 42 of the portable terminal 4 displays a header portion 421, a total information portion 422, a merchandise information portion 423, and a footer portion 424 in the transaction information display window.

The header portion 421 displays characters including a company name "XX", a store name "^{∗∗} store", and "registering" displaying that the customer is doing shopping. Further, a terminal code section 4211 is included in the header portion 421. The terminal code section 4211 displays a terminal code.

The total information portion 422 displays a total number of items and a total amount of registered merchandise. The total number of items and the total amount do not contain the merchandise once registered, but cancelled.

In the merchandise information portion 423, information of the registered merchandise and the cancelled merchandise is displayed. The displayed merchandise information contains a merchandise name, a price, a tax rate, a number of items, and additional information. The additional information can be information indicating the merchandise requires age verification and can be set regardless of highlighted merchandise. Regarding the cancelled merchandise, strikethrough lines can be drawn on the merchandise name, the price, and the number of items.

The footer portion 424 displays various operators. Specifically, in the footer portion 424, a "NO BARCODE" icon, a "SCAN" icon, a "PAY" icon are displayed. The "NO BARCODE" icon is an icon for displaying a preset window for merchandise registration of merchandise with no merchandise barcode. The "SCAN" icon is an icon for imaging of the merchandise barcode. The "PAY" icon is an icon for inputting a checkout instruction.

Returning to FIG. 15, an outline of the operation of the transaction management system 1 is explained.

Whenever the customer images a barcode attached to the merchandise, the processing at Act 8 to Act 12 is repeated. The attendant PC 6 transmits a store transaction information request to the server apparatus 2 (Act 13). Note that the store transaction information request is processed at Act 13 for convenience of explanation, however, output to the server apparatus 2 repeatedly over a short time regardless of other processing. In other words, the store transaction information request is transmitted to the server apparatus 2 substantially constantly.

Upon receiving the store transaction information request, the server apparatus 2 extracts transaction information correlated with the store code contained in the store transaction information request as store transaction information from the transaction information management table 215 (Act 14). The server apparatus 2 transmits the extracted store transaction information to the attendant PC 6 (Act 15).

The attendant PC 6 updates the status management table 612 based on the received store transaction information (Act 16). The attendant PC 6 displays a transaction list window on the display unit 62 based on the information stored in the status management table 612 (Act 17). As described above, the store transaction information request is transmitted to the server apparatus 2 repeatedly at short time intervals, and the processing at Act 14 to Act 17 executed incidentally to the store transaction information request is also repeatedly executed. Therefore, the transaction list window is automatically updated.

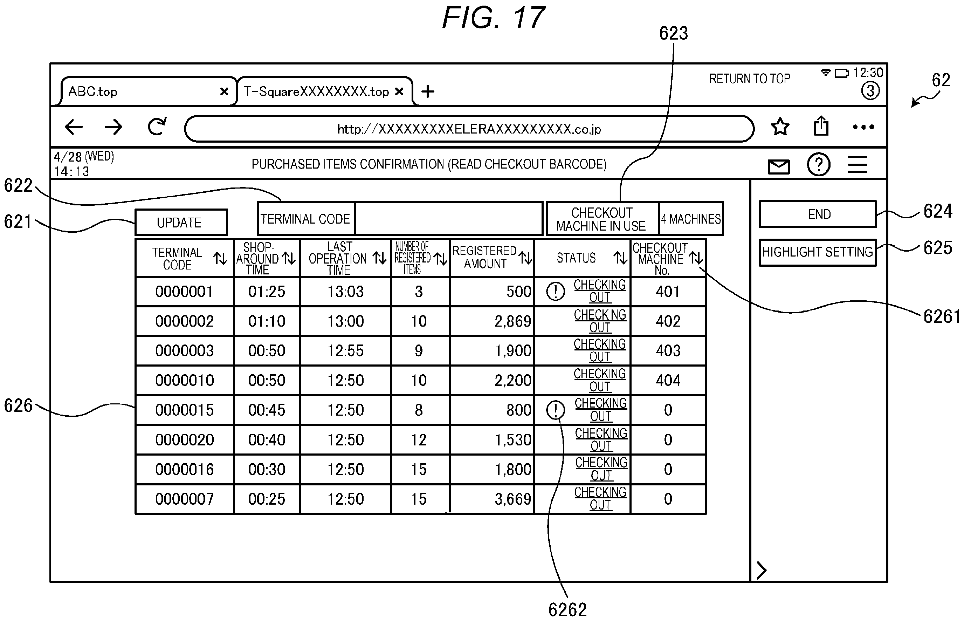

Here, the transaction list window is explained. FIG. 17 shows the transaction list window displayed by the attendant PC 6. The display unit 62 of the attendant PC 6 displays an update button 621, a terminal code entry field 622, an in-use checkout machine display portion 623, an end button 624, a highlight setting button 625, and a status display portion 626 in the transaction list window.

The update button 621 is an operator for manually updating information displayed in the status display portion 626. The terminal code entry field 622 is an entry field for entry of a terminal code and display of a transaction statement window relating to the terminal code. The terminal code entry field 622 is utilized, for example, when the scanner unit 64 fails to read the checkout barcode. The in-use checkout machine display portion 623 displays the number of checkout machines 5 in use.

The end button 624 is an operator for ending the transaction list display. A window displayed after the end button 624 is operated may be arbitrarily set by the store. The highlight setting button 625 is an operator for transition to a highlight setting window.

The status display portion 626 displays statuses of customers with respect to each terminal code. Specifically, the status display portion 626 correlates and displays the respective items of the terminal code, the shop-around time, the last operation time, the number of registered items, the registered amount, the status, and the checkout machine No. The contents of the respective items are as described in the explanation of the status management table 612 of the attendant PC 6 and the overlapping explanation will be omitted.

Sort icons 6261 with upward and downward arrows are displayed for the respective items (columns) of the status display portion 626. When the sort icon 6261 for one item is operated, sorting of the statuses of the customers is performed with the one item as a key. For example, when the sort icon 6261 of the item of the shop-around time is operated in the state shown in FIG. 17, the respective pieces of data are sorted in ascending order of the shop-around times. That is, the data in the lowermost row of the shortest shop-around time is placed in the uppermost position. Similarly, data of all rows is sorted. When the sort icon 6261 of the item of the shop-around time is operated again, the respective pieces of data are then sorted in descending order of the shop-around times.

The same applies when the sort icon 6261 of another item (column) is operated. If the numerical values of the item being used as a key are the same when sorted in ascending order or descending order, the numerical value for the next item (column) located more leftward can be sorted for setting arrangement priority. For example, when the shop-around times are sorted in ascending order, in the example of FIG. 17, the shop-around times are the same in the third row (the row of the checkout machine No. 403) and the fourth row (the row of the checkout machine No. 404), however, the third row has the smaller value for the terminal code (item located most leftward) so is arranged to be above the other row. In the default display form of the status display portion 626, the item of the status can be set with data "checking out" located higher.

In the status display portion 626, highlighted icons 6262 are displayed in the item of the status. The highlighted icon 6262 is an icon showing that the transaction information contains highlighted merchandise. The attendant may recognize the necessity of a careful attendant check for the transaction of the data with the highlighted icon 6262.

Returning to FIG. 15, the outline of the operation of the transaction management system 1 is explained.

If the customer ends merchandise registration of merchandise to be purchased and operates a payment icon in the transaction information display window, a payment instruction is input to the portable terminal 4 (Act 18). The portable terminal 4 transmits the payment instruction to the server apparatus 2 (Act 19).

The server apparatus 2 updates the transaction information and calculates a transaction amount based on the received payment instruction (Act 20). Specifically, the server apparatus 2 registers a checkout instruction time corresponding to the transaction code contained in the checkout instruction in the transaction information management table 215. Further, the server apparatus 2 calculates the transaction amount based on the merchandise information corresponding to the transaction code. The server apparatus 2 transmits the calculated transaction amount and an attendant check window display instruction to the portable terminal 4 (Act 21).

The portable terminal 4 generates a checkout barcode showing the transaction code (Act 22). The portable terminal 4 checks the mode of the mobile self-service checkout system 3 with reference to the mode information portion 414 (Act 23) and, if the mode is the front check mode, displays an attendant check window (Act 24). If the mode of the mobile self-service checkout system 3 is the normal mode, the portable terminal 4 displays a checkout window.

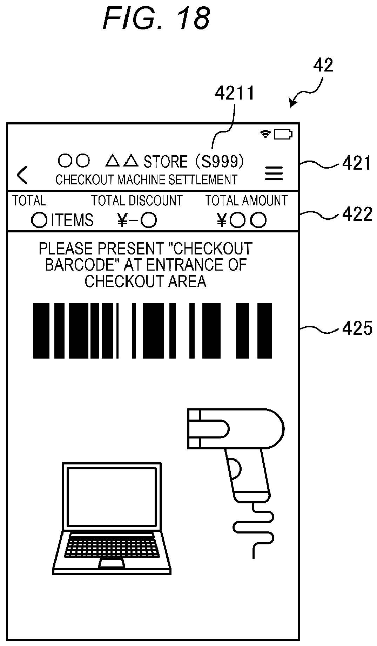

Here, the attendant check window is explained. FIG. 18 shows the attendant check window displayed by the portable terminal 4. The display unit 42 of the portable terminal 4 displays the header portion 421, the total information portion 422, and a checkout barcode portion 425 in the attendant check window.

The header portion 421 displays characters including the company name "XX", the store name "^{∗∗} store", and "checkout machine settlement" showing that the customer enters the checkout instruction. Further, the terminal code section 4211 is formed in the header portion 421. The terminal code section 4211 displays the terminal code.

The total information portion 422 displays the total number of items and the total amount of registered merchandise. If discounted merchandise is registered in the transaction, the total information portion 422 also displays a total amount for the discounted amount.

The checkout barcode portion 425 displays a checkout barcode showing the transaction code. The checkout barcode portion 425 displays a guidance message to the customer such as "PRESENT 'CHECKOUT BARCODE' AT ENTRANCE OF CHECKOUT AREA". Furthermore, the checkout barcode portion 425 displays an illustration giving an idea of reading of a checkout barcode using the scanner unit 64 of the attendant PC 6. The customer viewing the attendant check window may recognize the necessity of movement to a location where the attendant PC 6 is placed and presentation of the checkout barcode.

Returning to FIG. 15, the outline of the operation of the transaction management system 1 is explained.

If the attendant scans the checkout barcode in the attendant check window presented by the customer using the scanner unit 64, the checkout barcode is input to the attendant PC 6 (Act 25). The attendant PC 6 reads the transaction code from the checkout barcode, and transmits the transaction information request containing the transaction code to the server apparatus 2 (Act 26).

The server apparatus 2 extracts the transaction information corresponding to the transaction code contained in the transaction information request from the transaction information management table 215 (Act 27). The server apparatus 2 transmits the extracted transaction information to the attendant PC 6 (Act 28).

The attendant PC 6 switches display from the transaction list window and displays the transaction statement window (Act 29).

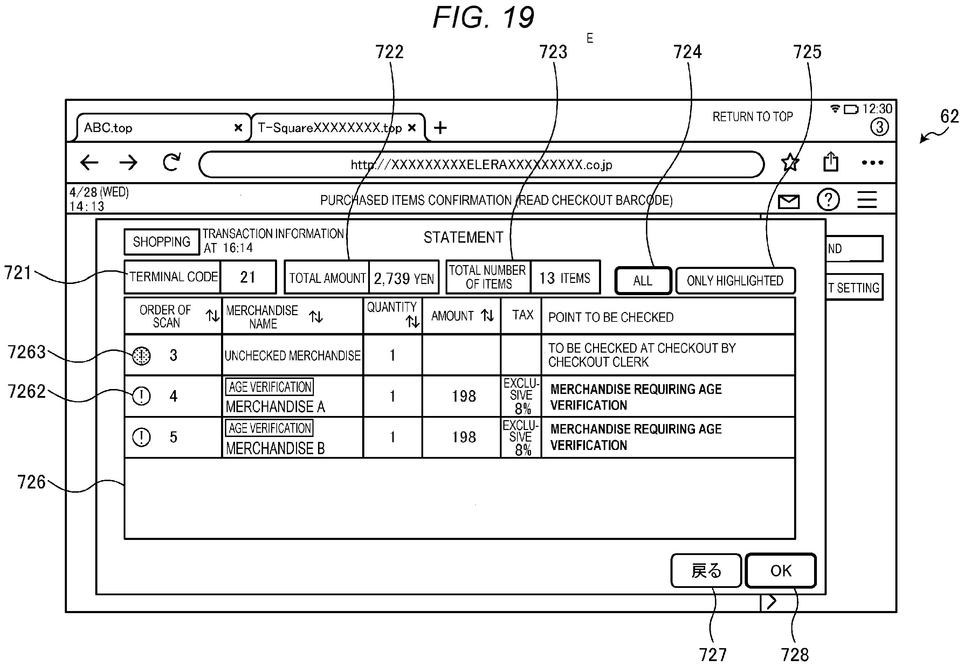

Here, the transaction statement window is explained. FIG. 19 shows the transaction statement window displayed by the attendant PC 6. The display unit 62 of the attendant PC 6 displays a terminal code display portion 721, a total amount display portion 722, a total number of items display portion 723, a display switch button 724, a display object display portion 725, a merchandise detail portion 726, a return button 727, and an OK button 728 in the transaction statement window.

The terminal code display portion 721 displays a terminal code corresponding to an object transaction as a display object of the transaction statement window. The total amount display portion 722 displays a transaction amount of the object transaction. The total number of items display portion 723 displays the number of merchandise items to be purchased in the object transaction.

The display switch button 724 is an operator for switching a display object displayed in the merchandise detail portion 726. The display switch button 724 switches the display object displayed in the merchandise detail portion 726 between all merchandise items as transaction objects or only highlighted merchandise items. In the example of FIG. 19, only the highlighted merchandise items are displayed in the merchandise detail portion 726, and characters "ALL" are displayed in the display switch button 724. When the display switch button 724 is operated in the state, all merchandise items as transaction objects are displayed in the merchandise detail portion 726.

For example, in a store where operational control to check all coincidences between registered merchandise items and merchandise items held in a shopping cart by the attendant is performed, the display objects displayed in the merchandise detail portion 726 are all merchandise items as transaction objects. Or, in a store where operational control to check only highlighted merchandise items of the registered merchandise items by the attendant is performed, the display objects displayed in the merchandise detail portion 726 are only the highlighted merchandise items.

The display object display portion 725 displays the display objects displayed in the merchandise detail portion 726. In the example of FIG. 19, only the highlighted merchandise items are displayed in the merchandise detail portion 726, and "HIGHLIGHTED ONLY" is displayed in the display object display portion 725.

The merchandise detail portion 726 displays merchandise details. Specifically, the merchandise detail portion 726 correlates and displays the respective values for order of scan, merchandise name, quantity, amount, tax, and point to be checked with respect to each item of merchandise. The order of scan shows the order of merchandise scanning. The merchandise name shows a merchandise name. The quantity shows the quantity of corresponding registered merchandise items. The amount shows an amount of corresponding merchandise, specifically, an amount obtained by multiplication of a unit price by the quantity. The tax shows a category of tax (tax treatment) to be applied. The point to be checked shows a display comment preset for the merchandise (see the highlight information management table 214).

In the merchandise detail portion 726, sort icons 7261 are displayed for the items of the order of scan, the quantity, and the amount. The function of the sort icon 7261 is the same as the sort icon 6261 in the transaction list window in FIG. 17 and the overlapping description will be omitted.

In the merchandise detail portion 726, a highlight icon 7262 and an importance icon 7263 are displayed in the item of the order of scan. The highlight icon 7262 is an icon showing highlighted merchandise. The importance icon 7263 is an icon showing merchandise at a high degree of importance in the attendant check. The highlight icon 7262 and the importance icon 7263 have the same shape, but can be displayed in different colors.

The return button 727 is an operator for returning to the transaction list window. The OK button 728 is an operator for inputting information representing that the attendant check is completed. When the OK button 728 is operated, the attendant PC 6 transmits check information to the server apparatus 2.

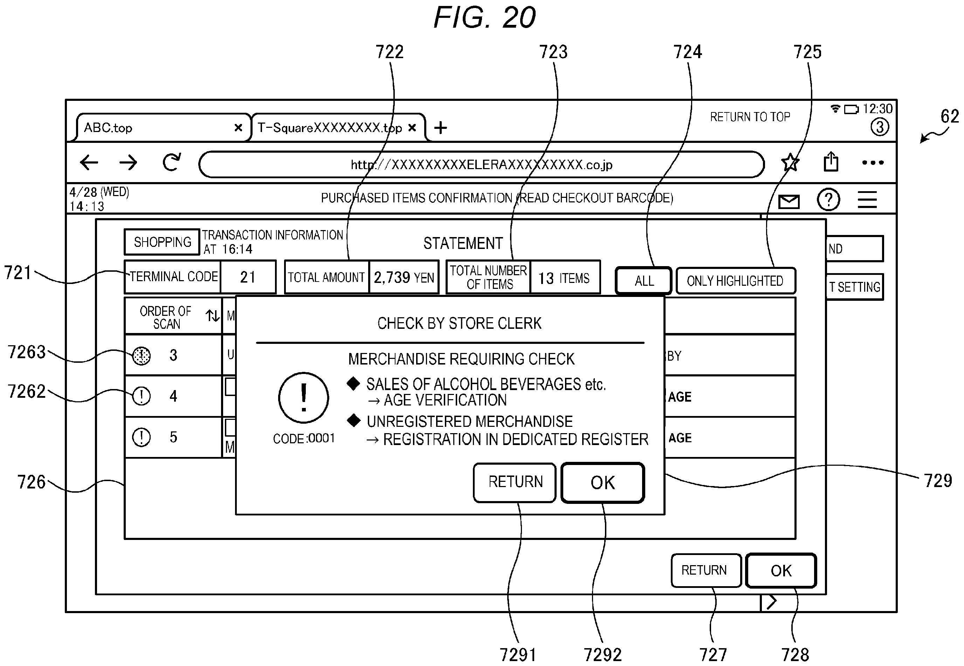

FIG. 20 shows a guidance window displayed by the attendant PC 6. The guidance window is a window displayed before the transaction statement window is displayed. Whether to display the guidance window may be arbitrarily set by the store. The guidance window is in a form of popup display of a guidance display portion 729 on the transaction statement window.

The guidance display portion 729 is displayed only if the transaction contains the highlighted merchandise. The guidance display portion 729 displays a guidance of details to be performed by the attendant in the attendant check. For example, in the guidance display portion 729, a message showing that transaction object merchandise contains the merchandise requiring a check by the attendant is displayed. Further, in the guidance display portion 729, messages showing the necessity of age verification for alcoholic beverages or the like, the necessity of registration in a dedicated register for unregistered merchandise, etc. are displayed.

In the guidance display portion 729, a return button 7291 and an OK button 7292 are displayed. The return button 7291 is an operator for returning to the transaction list window. The OK button 7292 is an operator for inputting information representing that the attendant checks the details displayed in the guidance display portion 729. If the OK button 7292 is operated, the guidance display portion 729 is erased and the transaction statement window is displayed.

Returning to FIG. 15, the outline of the operation of the transaction management system 1 is explained.

In the transaction statement window, if the OK button 728 is operated, check completion entry is made to the attendant PC 6 (Act 30). The attendant PC 6 transmits the check information to the server apparatus 2 (Act 31).

The server apparatus 2 updates the attendant check flag (Act 32). Specifically, the server apparatus 2 rewrites the attendant check flag corresponding to the transaction code contained in the check information to "1" in the transaction information management table 215. The server apparatus 2 transmits a checkout window display instruction to the portable terminal 4 (Act 33).

If receiving the checkout window display instruction, the portable terminal 4 switches from the attendant check window and displays a checkout window in the display unit 42 (Act 34).

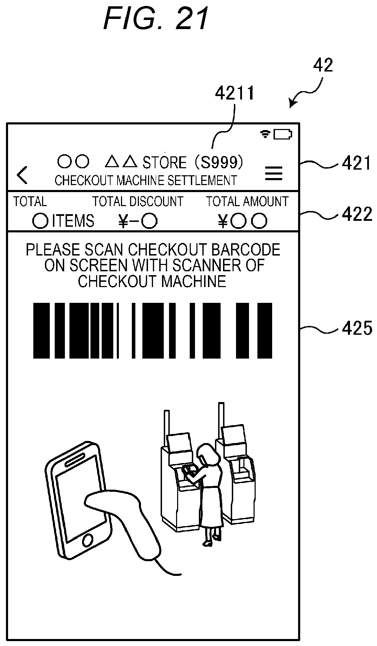

Here, the checkout window is explained. FIG. 21 shows the checkout window displayed by the portable terminal 4. The display unit 42 of the portable terminal 4 displays the header portion 421, the total information portion 422, and the checkout barcode portion 425 in the check window. The checkout window can be a window generally similar to the attendant check window and, here, differences from the attendant check window are explained and the overlapping description is omitted.

The checkout barcode portion 425 displays a guidance message to the customer such as "PLEASE SCAN CHECKOUT BARCODE ON SCREEN WITH SCANNER OF CHECKOUT MACHINE". Further, the checkout barcode portion 425 displays an illustration giving an idea of reading of the checkout barcode using the scanner unit of the checkout machine 5. The customer viewing the checkout window may recognize the necessity of movement to the checkout machine 5 and scanning of the checkout barcode.

Returning to FIG. 15, the outline of the operation of the transaction management system 1 is explained.

If the customer scans the checkout barcode using the scanner unit of the checkout machine 5, the checkout barcode is input to the checkout machine 5 (Act 35). The checkout machine 5 requests the transaction information of the transaction code read from the checkout barcode to the server apparatus 2 (Act 36).

The server apparatus 2 executes attendant check determination processing (Act 37). The attendant check determination processing is processing of determining whether the attendant check is completed with respect to the transaction for which the transaction information request is made. The details of the attendant check determination processing will be described later.

If the attendant check is completed, the server apparatus 2 transmits the transaction information corresponding to the transaction code contained in the transaction information request to the checkout machine 5 (Act 38). Concurrently, the server apparatus 2 correlates and stores the checkout machine No. with the transaction code contained in the transaction information request in the transaction information management table 215.

If the attendant check has not been completed, the server apparatus 2 transmits error information to the checkout machine 5. The checkout machine 5 receiving the error information displays or provides a message prompting the customer to undergo the attendant check.

The checkout machine 5 receiving the transaction information executes checkout processing (Act 39). The checkout machine 5 executes checkout processing relating to cash settlement or checkout processing relating to cashless settlement based on the operation by the customer. If an operation by the attendant is necessary as in a case when unregistered merchandise or the like is present, the checkout machine 5 can also be operated by the attendant. Once the checkout processing is completed, the checkout machine 5 transmits a checkout completion notification to the server apparatus 2 (Act 40).

The server apparatus 2 updates the transaction information based on the received checkout completion notification (Act 41). Specifically, the server apparatus 2 rewrites the checkout completion flag to "1" in the transaction information management table 215.

The server apparatus 2 transmits the checkout completion notification to the portable terminal 4 (Act 42). The server apparatus 2 transmits the checkout completion notification to the portable terminal 4 identified by the terminal code corresponding to the transaction code contained in the checkout completion notification received from the checkout machine 5.

The portable terminal 4 displays information representing that the checkout is completed to the display unit 42 (Act 43).

Through the above-described operation, the customer is enabled to pay at the checkout machine 5 after the attendant check by an attendant placed near the entrance of the checkout area. Accordingly, it is not necessary for the attendant to move to each checkout machine 5 each time a check is necessary and efficiency of the attendant check is improved.

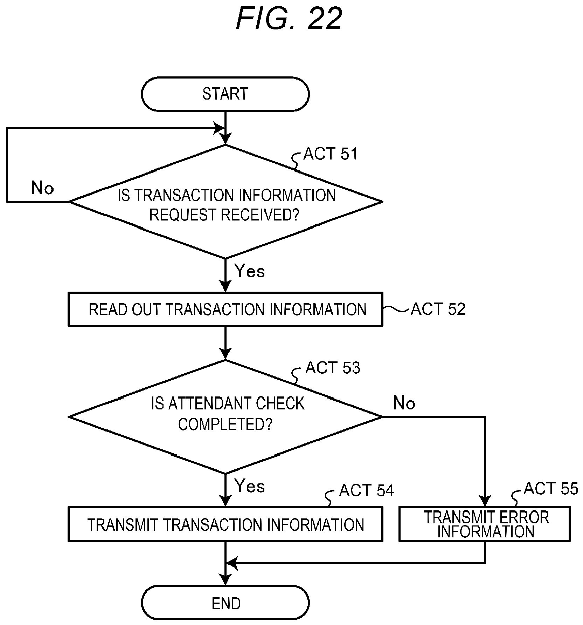

Next, the attendant check determination processing executed by the server apparatus 2 will be explained. FIG. 22 is a flowchart of the attendant check determination processing by the control unit 20 of the server apparatus 2.

The control unit 20 determines whether the transmitting and receiving portion 2001 received the transaction information request from the checkout machine 5 (Act 51) and, if not (N at Act 51), returns to the processing at Act 51 and waits.

If the transmitting and receiving portion 2001 receives the transaction information request (Y at Act 51), the information managing portion 2002 reads out the transaction information corresponding to the transaction code contained in the transaction information request from the transaction information management table 215 (Act 52).

Subsequently, the information processing portion 2003 determines whether an attendant check of the read out transaction information is completed (Act 53). Specifically, the information processing portion 2003 determines whether "1" is registered in the attendant check flag of the read out transaction information.

If the attendant check of the read out transaction information is completed (Y at Act 53), the transmitting and receiving portion 2001 transmits the transaction information to the checkout machine 5 as the transmission source of the transaction information request (Act 54). Then, the control unit 20 ends the attendant check determination processing.

If the attendant check of the read transaction information is not completed (N at Act 53), the transmitting and receiving portion 2001 transmits the error information to the checkout machine 5 as the transmission source of the transaction information request (Act 55). The error information is information representing the transaction information is not transmitted because the attendant check is not completed. Then, the control unit 20 ends the attendant check determination processing.

By the attendant check determination processing, the server apparatus 2 transmits the transaction information on only the transaction for which the attendant check is completed to the checkout machine 5.

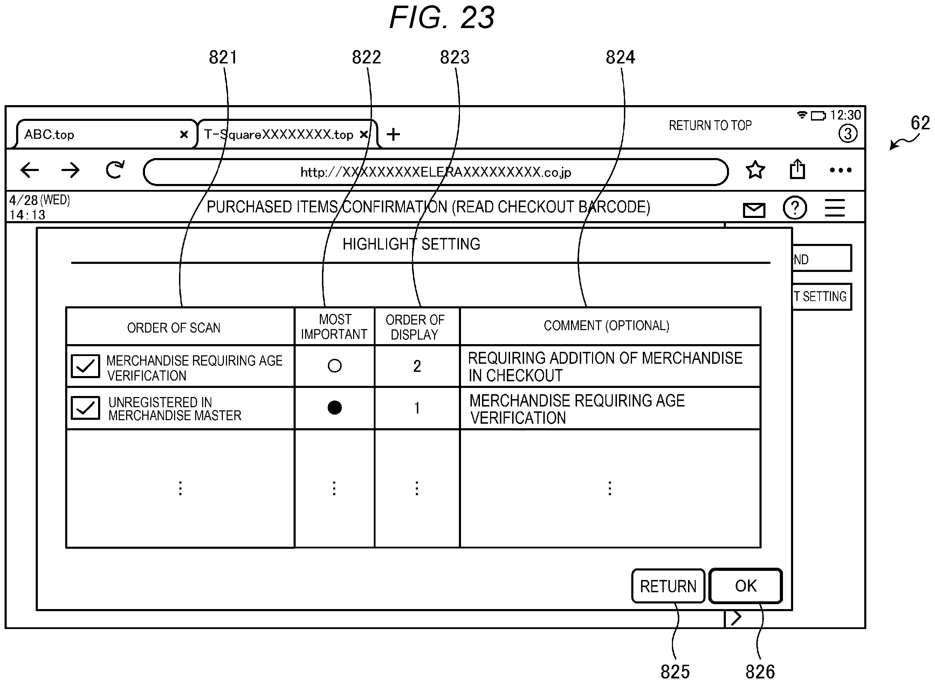

Next, the setting method of the highlighted merchandise is explained. FIG. 23 shows the highlight setting window displayed by the attendant PC 6. The highlight setting window can be displayed by operation of the highlight setting button 625 in the transaction list window shown in FIG. 17. The display unit 62 of the attendant PC 6 displays an item select field 821, a degree of importance select field 822, an order of display setting field 823, a display comment setting field 824, a return button 825, and a save button 826 in the highlight setting window.

The item select field 821 displays a plurality of items and displays check boxes corresponding to the respective items. As such items, merchandise requiring age verification, merchandise unregistered in merchandise master, bundled merchandise, auto-discount merchandise, expensive merchandise, and other many items can be prepared. A user operating the attendant PC 6 checks the check box of the item set as a highlighted item in the store itself.

The merchandise corresponding to the item selected as the highlighted item is set as highlighted merchandise and the highlight icon 7262 is displayed in the transaction statement window (see FIG. 19). The merchandise can be such things as alcoholic beverages or cigarettes if the item requires age verification.

The degree of importance select field 822 displays radio buttons corresponding to the respective items. The user operating the attendant PC 6 selects the radio button corresponding to the item set as an important item for the attendant check in the store itself. For the merchandise corresponding to the item for which the radio button of the degree of importance is selected, the importance icon 7263 is displayed in the transaction statement window (see FIG. 19). Note that the degree of importance may be made selectable only for the highlighted item with a check in the checkbox of the item select field 821 or selectable for the item without a check in the checkbox of the item select field 821.

The order of display setting field 823 displays entry fields corresponding to the respective items. The user operating the attendant PC 6 enters the order of display in the entry fields. The order of display is an order of display in the transaction statement window. In the example shown in FIG. 23, the order of display of the merchandise unregistered in merchandise master is set to "1" and, if the transaction object contains the merchandise unregistered in merchandise master, the merchandise unregistered in merchandise master is displayed in the uppermost row in the transaction statement window.

The display comment setting field 824 displays comment entry fields corresponding to the respective items. The user operating the attendant PC 6 enters comments in the comment entry fields as necessary. In the display comment setting field 824, only the comment can be entered with respect to the highlighted item of the corresponding item or the item with the degree of importance selected. The entered comment is displayed as the point to be checked in the transaction statement window.

The return button 825 is an operator for returning to the transaction list window. The save button 826 is an operator for saving setting information entered in the highlight setting window. If the save button 826 is operated, store information (company code, store code) of the store where the attendant PC 6 is placed and the setting information are transmitted to the server apparatus 2.

The server apparatus 2 updates the highlight information management table 214 based on the received store information and setting information. Thereby, the server apparatus 2 may manage the highlighted merchandise set in the respective stores.

Next, a modified example of the attendant check determination processing is explained. In an above-described example, the server apparatus 2 executes the attendant check determination processing, however, in a modified example, the checkout machine 5 instead performs the attendant check determination processing.

It is assumed that, in the checkout barcode read by the scanner unit of the checkout machine 5, a check code indicating whether the attendant check was completed is encoded in addition to the transaction code. For example, in the sequence chart shown in FIG. 15, upon receiving the checkout window display instruction at Act 33, the portable terminal 4 generates the checkout barcode to be displayed in the checkout window. The check code indicating whether the attendant check has been completed is also encoded in addition to the transaction code in the checkout barcode to be displayed in the checkout window. The customer uses the scanner unit of the checkout machine 5 to read the generated checkout barcode.

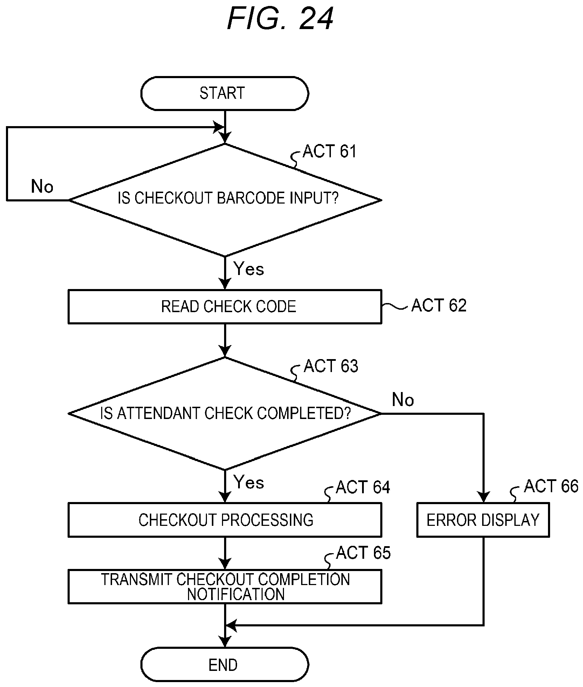

FIG. 24 is a flowchart of the attendant check processing executed by the control unit of the checkout machine 5.

The control unit determines whether the checkout barcode is input (Act 61) and, if not (N at Act 61), returns to the processing at Act 61 and waits. If the checkout barcode is input, the control unit reads the check code encoded in the checkout barcode (Act 62).

The control unit determines whether the read check code indicates that the attendant check is completed (Act 63). If the attendant check is completed (Y at Act 63), the control unit executes checkout processing (Act 64). The checkout processing is the same as the above-described example. Subsequently, the control unit transmits the checkout completion notification to the server apparatus 2 (Act 65). Then, the control unit ends the attendant check determination processing.

In the processing at Act 63, if the attendant check is not completed (N at Act 63), the control unit displays error information in the display unit of the checkout machine 5 (Act 66). The displayed error information can indicate a status in which the attendant check is not completed and a payment is disabled. Then, the control unit ends the attendant check determination processing.

A server apparatus 2 of an embodiment includes a transaction managing portion (information managing portion 2002) correlating and managing transaction identification information (transaction code or terminal code) for identification of one transaction, transaction information necessary for checkout processing for a customer to pay, and check completion information (attendant check flag) registered if a check by a store clerk was completed with respect to merchandise registered by an operation by the customer, a receiving portion (transmitting and receiving portion 2001) receiving a transaction information request containing the transaction identification information, and an outputting portion (transmitting and receiving portion 2001) outputting transaction information corresponding to the transaction identification information on the condition that the transaction identification information contained in the transaction information request received by the receiving portion is correlated with the check completion information.

Thereby, the server apparatus 2 may guide the customer to undergo an attendant check before the customer pays at the checkout machine 5. Accordingly, check work by an attendant is easier.

A server apparatus 2 of an embodiment further includes the mode setting portion 2004 for permitting setting of a front check mode in which the outputting portion outputs the transaction information on the condition that the transaction identification information is correlated with the check completion information and a normal mode in which the outputting portion outputs the transaction information regardless of the check completion information.

Thereby, in the server apparatus 2, the mode of the mobile self-service checkout system 3 may be made selectable to be the front check mode or the normal mode. Accordingly, a store may employ a mode of a mobile self-service checkout system 3 suitable for the operational control of the particular store.

The transaction management system 1 includes server apparatus 2 for managing transaction information and the checkout machine 5 for executing checkout processing relating to the transaction information managed in the server apparatus 2. The server apparatus 2 correlates and manages transaction identification information (as a transaction code or terminal code) for identification of the transaction, transaction information necessary for checkout processing for a customer to pay, and check completion information (attendant check flag) registered when a check by a store clerk is completed on merchandise registered by the customer, receives a transaction information request containing the transaction identification from the checkout machine, and outputs transaction information corresponding to the transaction identification information if the transaction identification information contained in the request is correlated with check completion information. The checkout machine 5 transmits the transaction identification request to the server apparatus 2 and receives the transaction information as a response to the transaction identification request, and executes checkout processing based on the received transaction information.

The transaction management system 1 may guide the customer to undergo an attendant check before the customer begins to pay at the checkout machine 5. Accordingly, the check work by the attendant is easy.

A transaction management system 1 of an embodiment includes the attendant PC 6 operated by a store clerk. The attendant PC 6 displays the transaction information received from the server apparatus 2 and correlates and transmits the input check completion information and the transaction identification information to the server apparatus 2, and the server apparatus 2 correlates and stores the received check completion information and transaction identification information.

Thereby, the attendant may perform an attendant check while confirming the transaction information of the customer using the attendant PC 6 and input the check completion information to the attendant PC 6. Accordingly, the check work by the attendant is easier.

An attendant PC 6 of the transaction management system 1 of an embodiment displays the transaction information with preset particular merchandise highlighted (highlighted merchandise). In addition, the attendant PC 6 of the transaction management system 1 of an embodiment displays a comment on a check of merchandise with respect to each particular item of merchandise.

Thereby, the attendant may easily recognize the merchandise to check. Accordingly, the check work by the attendant is easier.

The control programs executed by the server apparatus 2, the portable terminal 4, the checkout machine 5, and the attendant PC 6 may be recorded in a non-transitory, computer-readable recording medium such as a CD-ROM, or may be downloaded or accessed via a network such as the Internet and downloaded via the network and provided.

While certain embodiments have been described, these embodiments are presented as examples, but not intended to limit the scope of the invention. These novel embodiments may be implemented in other various forms and various omissions, replacements, changes may be made without departing from the scope of the invention. These embodiments or their modifications are within the scope of the invention and within the scope of the invention described in claims and equivalents thereof.

## Claims

1. An information processing apparatus, comprising:
a communication interface connectable to a portable registration terminal, an attendant terminal, and a checkout machine;
a storage unit for storing transaction information from the portable registration terminal; and
a processor configured to:
store transaction information received from the portable registration terminal via the communication interface in association with a transaction identification and a check completion flag, the check completion flag indicating whether the transaction requires a store clerk confirmation before transaction completion;
receive a transaction information request indicating the transaction identification via the communication interface from the checkout machine; and
in response to transaction information request, output the transaction information corresponding to the transaction identification if the check completion flag indicates the store clerk confirmation has been completed or an error message if the check completion flag indicates the store clerk confirmation has not been completed.

2. The information processing apparatus according to claim 1, wherein the processor is further configured to:
receive a store transaction request including a store identification via the communication interface from the attendant terminal and output transaction information for each transaction associated with the store identification.

3. The information processing apparatus according to claim 1 or 2, wherein the processor is further configured to:
receive a transaction update via the communication interface from the attendant terminal in association with the transaction identification; and
update the transaction information associated with the transaction identification to reflect the transaction update.

4. The information processing apparatus according to claim 3, wherein the transaction update indicates a change in the check completion flag.

5. The information processing apparatus according to any one of claims 1 to 4, wherein the processor is further configured to:
receive a mode setting value indicating a front mode operation control in which the check completion flag must indicate completion of the store clerk confirmation before the transaction information will be sent to the checkout machine or a normal mode in which the transaction information will be sent to the checkout machine regardless of the check completion flag.

6. A transaction management system, comprising:
a server apparatus for managing transaction information; and
a checkout machine for executing checkout processing, wherein
the server apparatus includes:
a communication interface connectable to a portable registration terminal, an attendant terminal, and the checkout machine;
a storage unit for storing transaction information from the portable registration terminal; and
a processor configured to:
store transaction information received from the portable registration terminal via the communication interface in association with a transaction identification and a check completion flag, the check completion flag indicating whether the transaction requires a store clerk confirmation before transaction completion;
receive a transaction information request indicating the transaction identification via the communication interface from the checkout machine; and
in response to transaction information request, output the transaction information corresponding to the transaction identification if the check completion flag indicates the store clerk confirmation has been completed or an error message if the check completion flag indicates the store clerk confirmation has not been completed.

7. The transaction management system according to claim 6, wherein the processor is further configured to:
receive a store transaction request including a store identification via the communication interface from the attendant terminal and output transaction information for each transaction associated with the store identification.

8. The transaction management system according to claim 6 or 7, wherein the processor is further configured to:
receive a transaction update via the communication interface from the attendant terminal in association with the transaction identification; and
update the transaction information associated with the transaction identification to reflect the transaction update.

9. The transaction management system according to claim 8, wherein the transaction update indicates a change in the check completion flag.

10. The transaction management system according to any one of claims 6 to 9, wherein the processor is further configured to:
receive a mode setting value indicating a front mode operation control in which the check completion flag must indicate completion of the store clerk confirmation before the transaction information will be sent to the checkout machine or a normal mode in which the transaction information will be sent to the checkout machine regardless of the check completion flag.

11. The transaction management system according to any one of claims 6 to 10, further comprising:
the attendant terminal to be operated by a store clerk, wherein
the attendant terminal displays the store transaction information received from the server apparatus.

12. The transaction management system according to claim 11, wherein the attendant terminal displays transaction information with preset merchandise highlighted.

13. The transaction management system according to any one of claims 6 to 11, further comprising:
a plurality of the checkout machines for executing checkout processing in a checkout area of a store;
an attendant terminal at an entrance to the checkout area..
